(19) Europäisches Patentamt
European Patent Office
Office européen des brevets

(11) **EP 4 567 595 A1**

(12) **EUROPEAN PATENT APPLICATION**
published in accordance with Art. 153(4) EPC

(43) Date of publication:
**11.06.2025 Bulletin 2025/24**

(21) Application number: **23859313.1**

(22) Date of filing: **28.08.2023**

(51) International Patent Classification (IPC):
**G06F 9/48** (2006.01)  **G06N 20/10** (2019.01)

(52) Cooperative Patent Classification (CPC):
**G06F 9/48; G06F 9/50; G06F 11/34; G06F 18/23; G06N 20/00; G06N 20/10**

(86) International application number:
**PCT/CN2023/115329**

(87) International publication number:
**WO 2024/046283 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.08.2022 CN 202211056476**

(71) Applicant: **Huawei Technologies Co., Ltd.**
**Shenzhen, Guangdong 518129 (CN)**

(72) Inventors:
• **WANG, Yaoguang**
 **Shenzhen, Guangdong 518129 (CN)**

• **LI, Haicheng**
 **Shenzhen, Guangdong 518129 (CN)**
• **CHENG, Jian**
 **Shenzhen, Guangdong 518129 (CN)**
• **ZHOU, Yigang**
 **Shenzhen, Guangdong 518129 (CN)**
• **XIE, Xinghua**
 **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **TASK SCHEDULING METHOD, MODEL GENERATION METHOD, AND ELECTRONIC DEVICE**

(57)     Embodiments of this disclosure provide a task scheduling method, a model generation method, and an electronic device. The method includes: obtaining a plurality of first PMU metrics corresponding to a case in which a task runs on a first core of a heterogeneous system; inputting the plurality of first PMU metrics into a pre-generated load feature identification model, to obtain a predicted running feature of the task; and scheduling the task based on the predicted running feature. In this manner, the predicted running feature of the task can be provided through the load feature identification model, so that a reliable reference is provided for task scheduling, and task scheduling can be more accurate. Correspondingly, a hardware resource can be fully utilized.

200

Obtain a plurality of first PMU metrics generated corresponding to a case in which a task runs on a first core of a heterogeneous system — 210

Input the plurality of first PMU metrics into a pre-generated load feature identification model, to obtain a predicted running feature of the task — 220

Schedule the task based on the predicted running feature — 230

FIG. 2

**Description**

**TECHNICAL FIELD**

This disclosure relates to the field of terminal technologies, and more specifically, to a task scheduling method and apparatus, a model generation method and apparatus, an electronic device, a computer-readable storage medium, a chip, and a computer program product.

**BACKGROUND**

A multi-core processing architecture has been widely used in terminals such as a mobile phone and a personal computer, a server, and the like. In addition, in consideration of performance and power consumption, more hardware starts to use a processor for heterogeneous computing, for example, a big core and a little core. Generally, the big core has a strong computing capability but high power consumption, while the little core has a small computing capability but low power consumption. When a task runs on a multi-core processing architecture with heterogeneous computing, value of heterogeneous computing can be fully utilized by scheduling the task to a proper hardware resource. However, which factor is used to accurately perform task scheduling is one of problems that still need to be resolved currently.

**SUMMARY**

Example embodiments of this disclosure provide a solution for scheduling a task based on a running feature of the task.

According to a first aspect, a task scheduling method is provided. The method includes: obtaining a plurality of first performance monitoring unit (Performance Monitoring Unit, PMU) metrics corresponding to a case in which a task runs on a first core of a heterogeneous system; inputting the plurality of first PMU metrics into a pre-generated load feature identification model, to obtain a predicted running feature of the task; and scheduling the task based on the predicted running feature.

In this manner, the predicted running feature of the task can be provided through the load feature identification model, so that a reliable reference is provided for task scheduling, and task scheduling can be more accurate. Correspondingly, a hardware resource can be fully utilized.

In some embodiments of the first aspect, the method further includes: migrating the task to run on a second core of the heterogeneous system; and obtaining a plurality of second PMU metrics and a second task running metric that correspond to a case in which the task runs on the second core, where the second task running metric includes second running time and/or a second application performance metric.

In this manner, in an actual running process of the task, running metrics of the task on different cores may be separately obtained, so that the running metrics can be used for model evaluation.

In some embodiments of the first aspect, the method further includes: obtaining a first task running metric corresponding to a case in which the task runs on the first core, where the first task running metric includes first running time and/or a first application performance metric. Optionally, the first application performance metric may include a first throughput and/or first instructions per cycle (Instructions per cycle, IPC).

In some embodiments of the first aspect, the method further includes: determining an actual running feature of the task based on the first task running metric and the second task running metric.

In some embodiments of the first aspect, the method further includes storing at least one of the following: the plurality of first PMU metrics, the plurality of second PMU metrics, the first task running metric, the second task running metric, the predicted running feature, or the actual running feature.

In this way, an online dataset can be constructed during actual running of the task through storage, so that the dataset can be used for online update for the model.

In some embodiments of the first aspect, the method further includes: if an error between the predicted running feature and the actual running feature exceeds an error threshold, determining a quantity of times that the error of the task exceeds the error threshold; and if the quantity of times of the task exceeds a threshold for the quantity of times, updating the load feature identification model based on the second PMU metric and the actual running feature.

In this manner, whether accuracy of the model has been reduced can be evaluated online, and the model can be updated online in real time, to ensure precision of the used model, and ensure accuracy for task scheduling.

In some embodiments of the first aspect, the method further includes: determining whether an updated load feature identification model meets an accuracy requirement; and if it is determined that the accuracy requirement is not met, regenerating the load feature identification model.

In this manner, accuracy evaluation may be performed on the updated model, to ensure accuracy of the model.

In some embodiments of the first aspect, the load feature identification model is generated according to the following process: constructing an initial training set, where the initial training set includes a plurality of initial data items, each initial data item includes a first quantity of PMU metrics and a target value that correspond to a case in which the task runs on the first core or the second core of the heterogeneous system, and the target value indicates a running feature of the task; constructing an update training set based on the initial training set, where the update training set includes a plurality of update data items, each update data item includes a second quantity of PMU metrics and the target value, and the second quantity is less than the first quantity; and generating the load feature identification model based on the update training set.

In this manner, the load feature identification model can be generated through training based on a training set, and the model can provide an accurate running feature of the task for task scheduling.

In some embodiments of the first aspect, the constructing an initial training set includes: obtaining the first quantity of PMU metrics; obtaining the first application performance metric corresponding to the case in which the task runs on the first core; obtaining the second application performance metric corresponding to the case in which the task runs on the second core; determining the target value based on the first application performance metric and the second application performance metric; and constructing the initial training set based on the first quantity of PMU metrics and the target value.

In this manner, the target value may be used as a label in supervised learning. This can facilitate a model training process and improve model generation efficiency.

In some embodiments of the first aspect, the constructing an update training set based on the initial training set includes: dividing the first quantity of PMU metrics into a plurality of clusters; extracting the second quantity of PMU metrics from the plurality of clusters; and constructing the update training set based on the second quantity of PMU metrics and the target value.

In this manner, a quantity of PMU metrics in the update training set can be updated less. This can reduce a training scale, and improve training efficiency. In addition, in a subsequent model inference process, a quantity of PMU metrics that need to be collected is small. In this way, overheads of monitoring a kernel and/or a processor can be reduced, and energy consumption can be reduced.

In some embodiments of the first aspect, the dividing the first quantity of PMU metrics into a plurality of clusters includes: determining a first correlation between every two of the first quantity of PMU metrics; and clustering the first quantity of PMU metrics based on a correlation threshold to obtain the plurality of clusters, where a first correlation between any two PMU metrics in a same cluster is not less than the correlation threshold, or an average value of first correlations between every two PMU metrics in a same cluster is not less than the correlation threshold. In some embodiments of the first aspect, the first correlation includes at least one of the following: a covariance, a Euclidean distance, or a Pearson correlation coefficient.

In this manner, the PMU metrics can be clustered through the correlation, so that the PMU metrics in the same cluster have close performance. This can facilitate extraction of the PMU metrics.

In some embodiments of the first aspect, the extracting the second quantity of PMU metrics from the plurality of clusters includes: determining a second correlation between each of the first quantity of PMU metrics and the target value; sorting the first quantity of PMU metrics based on the second correlation; and extracting the second quantity of PMU metrics from a second quantity of clusters in the plurality of clusters in descending order of second correlations.

In this manner, a more representative second quantity of PMU metrics can be extracted for a model training process, so that a generated model can be more accurate.

In some embodiments of the first aspect, the second quantity of PMU metrics include a first PMU metric extracted from a first cluster in the plurality of clusters, and the method further includes: replacing the first PMU metric with a second PMU metric in the first cluster based on a user preference or an adjustment indication from a user.

In this manner, the input of the model may be further adjusted based on a requirement of the user. In this way, a personalized requirement of the user can be met, and flexibility of the model is improved.

In some embodiments of the first aspect, the method further includes: receiving input information of the user, where the input information indicates the second quantity and the correlation threshold.

In some embodiments of the first aspect, the generating the load feature identification model based on the update training set includes: generating the load feature identification model based on the update training set and a model configuration, where the model configuration includes a model type of the load feature identification model and/or a hyperparameter of the load feature identification model. In some embodiments of the first aspect, the model type includes at least one of the following in a machine learning model: supervised learning or unsupervised learning, where the supervised learning includes at least one of the following: a linear regression type or a neural network type; and the unsupervised learning includes at least one of the following: K-nearest neighbors or an expectation-maximization type.

In this manner, necessary information can be provided for a to-be-trained model through an input model configuration. This facilitates the model training process.

In some embodiments of the first aspect, the method further includes: testing the load feature identification model based on a test set, where the tested load feature identification model meets an accuracy requirement. In this manner, the generated load feature identification model may be further tested to ensure accuracy of the model.

In some embodiments of the first aspect, the running feature includes a performance speedup ratio between the first core and the second core.

According to a second aspect, a model generation method is provided. The method includes: constructing an initial training set, where the initial training set includes a plurality of initial data items, each initial data item includes a first quantity of PMU metrics and a target value that correspond to a case in which a task runs on a first core or a second core of a heterogeneous system, and the target value indicates a running feature of the task; constructing an update training set based on the initial training set, where the update training set includes a plurality of update data items, each update data item includes a second quantity of PMU metrics and the target value, and the second quantity is less than the first quantity; and generating a load feature identification model based on the update training set.

In some embodiments of the second aspect, the constructing an initial training set includes: obtaining the first quantity of PMU metrics; obtaining a first application performance metric corresponding to the case in which the task runs on the first core; obtaining a second application performance metric corresponding to the case in which the task runs on the second core; determining the target value based on the first application performance metric and the second application performance metric; and constructing the initial training set based on the first quantity of PMU metrics and the target value.

In some embodiments of the second aspect, the constructing an update training set based on the initial training set includes: dividing the first quantity of PMU metrics into a plurality of clusters; extracting the second quantity of PMU metrics from the plurality of clusters; and constructing the update training set based on the second quantity of PMU metrics and the target value.

In some embodiments of the second aspect, the dividing the first quantity of PMU metrics into a plurality of clusters includes: determining a first correlation between every two of the first quantity of PMU metrics; and clustering the first quantity of PMU metrics based on a correlation threshold to obtain the plurality of clusters, where a first correlation between any two PMU metrics in a same cluster is not less than the correlation threshold, or an average value of first correlations between every two PMU metrics in a same cluster is not less than the correlation threshold.

In some embodiments of the second aspect, the first correlation includes at least one of the following: a covariance, a Euclidean distance, or a Pearson correlation coefficient.

In some embodiments of the second aspect, the extracting the second quantity of PMU metrics from the plurality of clusters includes: determining a second correlation between each of the first quantity of PMU metrics and the target value; sorting the first quantity of PMU metrics based on the second correlation; and extracting the second quantity of PMU metrics from a second quantity of clusters in the plurality of clusters in descending order of second correlations.

In some embodiments of the second aspect, the second quantity of PMU metrics include a first PMU metric extracted from a first cluster in the plurality of clusters, and the method further includes: replacing the first PMU metric with a second PMU metric in the first cluster based on a user preference or an adjustment indication from a user.

In some embodiments of the second aspect, the method further includes: receiving input information of the user, where the input information indicates the second quantity and the correlation threshold.

In some embodiments of the second aspect, the generating a load feature identification model based on the update training set includes: generating the load feature identification model based on the update training set and a model configuration, where the model configuration includes a model type of the load feature identification model and/or a hyperparameter of the load feature identification model.

In some embodiments of the second aspect, the model type includes one or more of the following in a machine learning model: supervised learning or unsupervised learning, where the supervised learning includes at least one of the following: a linear regression type or a neural network type; and the unsupervised learning includes at least one of the following: K-nearest neighbors or an expectation-maximization type.

In some embodiments of the second aspect, the method further includes: testing the load feature identification model based on a test set, where the tested load feature identification model meets an accuracy requirement.

In some embodiments of the second aspect, the running feature includes a performance speedup ratio between the first core and the second core.

According to a third aspect, a task scheduling apparatus is provided. The apparatus includes: an obtaining module, configured to obtain a plurality of first PMU metrics corresponding to a case in which a task runs on a first core of a heterogeneous system; a prediction module, configured to input the plurality of first PMU metrics into a pre-generated load feature identification model, to obtain a predicted running feature of the task; and a scheduling module, configured to schedule the task based on the predicted running feature.

In some embodiments of the third aspect, the apparatus further includes: a task migration module, configured to migrate the task to run on a second core of the heterogeneous system; and a post-migration information obtaining module, configured to obtain a plurality of second PMU metrics and a second task running metric that correspond to a case in which the task runs on the second core, where the second task running metric includes second running time and/or a second application performance metric.

In some embodiments of the third aspect, the obtaining module is further configured to obtain a first task running metric corresponding to a case in which the task runs on the first core, where the first task running metric includes first running time and/or a first application performance metric. Optionally, the first application performance metric may include a first throughput and/or first IPC.

In some embodiments of the third aspect, the apparatus further includes an actual running feature determining module, configured to determine an actual running feature of the task based on the first task running metric and the second task running metric.

In some embodiments of the third aspect, the apparatus further includes a storage module, configured to store at least one of the following: the plurality of first PMU metrics, the plurality of second PMU metrics, the first task running metric, the second task running metric, the predicted running feature, or the actual running feature.

In some embodiments of the third aspect, the apparatus further includes a model update module, configured to: if an error between the predicted running feature and the actual running feature exceeds an error threshold, determine a quantity of times that the error of the task exceeds the error threshold; and if the quantity of times of the task exceeds a threshold for the quantity of times, update the load feature identification model based on the second PMU metric and the actual running feature.

In some embodiments of the third aspect, the apparatus further includes: an accuracy determining module, configured to determine whether an updated load feature identification model meets an accuracy requirement; and a model update module, configured to: if it is determined that the accuracy requirement is not met, regenerate the load feature identification model.

In some embodiments of the third aspect, the apparatus further includes: an initial training set construction module, configured to construct an initial training set, where the initial training set includes a plurality of initial data items, each initial data item includes a first quantity of PMU metrics and a target value that correspond to a case in which the task runs on the first core or the second core of the heterogeneous system, and the target value indicates a running feature of the task; an update training set construction module, configured to construct an update training set based on the initial training set, where the update training set includes a plurality of update data items, each update data item includes a second quantity of PMU metrics and the target value, and the second quantity is less than the first quantity; and a model generation module, configured to generate the load feature identification model based on the update training set.

In some embodiments of the third aspect, the initial training set construction module includes: a first obtaining submodule, configured to obtain the first quantity of PMU metrics; a second obtaining submodule, configured to obtain the first application performance metric corresponding to the case in which the task runs on the first core; a third obtaining submodule, configured to obtain the second application performance metric corresponding to the case in which the task runs on the second core; a target value determining submodule, configured to determine the target value based on the first application performance metric and the second application performance metric; and an initial training set construction submodule, configured to construct the initial training set based on the first quantity of PMU metrics and the target value.

In some embodiments of the third aspect, the update training set construction module includes: a clustering submodule, configured to divide the first quantity of PMU metrics into a plurality of clusters; an extraction submodule, configured to extract the second quantity of PMU metrics from the plurality of clusters; and an update training set construction submodule, configured to construct the update training set based on the second quantity of PMU metrics and the target value.

In some embodiments of the third aspect, the clustering submodule includes: a first correlation determining unit, configured to determine a first correlation between every two of the first quantity of PMU metrics; and a clustering unit, configured to cluster the first quantity of PMU metrics based on a correlation threshold to obtain the plurality of clusters, where a first correlation between any two PMU metrics in a same cluster is not less than the correlation threshold, or an average value of first correlations between every two PMU metrics in a same cluster is not less than the correlation threshold.

In some embodiments of the third aspect, the first correlation includes at least one of the following: a covariance, a Euclidean distance, or a Pearson correlation coefficient.

In some embodiments of the third aspect, the extraction submodule includes: a second correlation determining unit, configured to determine a second correlation between each of the first quantity of PMU metrics and the target value; a sorting unit, configured to sort the first quantity of PMU metrics based on the second correlation; and an extraction unit, configured to extract the second quantity of PMU metrics from a second quantity of clusters in the plurality of clusters in descending order of second correlations.

In some embodiments of the third aspect, the extraction submodule further includes an adjustment unit, configured to replace the first PMU metric with a second PMU metric in the first cluster based on a user preference or an adjustment indication from a user.

In some embodiments of the third aspect, the apparatus further includes a receiving module, configured to receive input information of the user, where the input information indicates the second quantity and the correlation threshold.

In some embodiments of the third aspect, the model generation module is configured to generate the load feature identification model based on the update training set and a model configuration, where the model configuration includes a model type of the load feature identification model and/or a hyperparameter of the load feature identification model.

In some embodiments of the third aspect, the model type includes one or more of the following in a machine learning model: supervised learning or unsupervised learning, where the supervised learning includes at least one of the following: a linear regression type or a neural network type; and the unsupervised learning includes at least one of the following: K-nearest neighbors or an expectation-maximization type.

In some embodiments of the third aspect, the apparatus further includes a test module, configured to test the load feature identification model based on a test set, where the tested load feature identification model meets an accuracy requirement.

In some embodiments of the third aspect, the running feature includes a performance speedup ratio between the first core and the second core.

According to a fourth aspect, a model generation apparatus is provided. The apparatus includes: an initial training set construction module, configured to construct an initial training set, where the initial training set includes a plurality of initial data items, each initial data item includes a first quantity of PMU metrics and a target value that correspond to a case in which a task runs on a first core or a second core of a heterogeneous system, and the target value indicates a running feature of the task; an update training set construction module, configured to construct an update training set based on the initial training set, where the update training set includes a plurality of update data items, each update data item includes a second quantity of PMU metrics and the target value, and the second quantity is less than the first quantity; and a model generation module, configured to generate a load feature identification model based on the update training set.

In some embodiments of the fourth aspect, the initial training set construction module includes: a first obtaining submodule, configured to obtain the first quantity of PMU metrics; a second obtaining submodule, configured to obtain a first application performance metric corresponding to the case in which the task runs on the first core; a third obtaining submodule, configured to obtain a second application performance metric corresponding to the case in which the task runs on the second core; a target value determining submodule, configured to determine the target value based on the first application performance metric and the second application performance metric; and an initial training set construction submodule, configured to construct the initial training set based on the first quantity of PMU metrics and the target value.

In some embodiments of the fourth aspect, the update training set construction module includes: a clustering submodule, configured to divide the first quantity of PMU metrics into a plurality of clusters; an extraction submodule, configured to extract the second quantity of PMU metrics from the plurality of clusters; and an update training set construction submodule, configured to construct the update training set based on the second quantity of PMU metrics and the target value.

In some embodiments of the fourth aspect, the clustering submodule includes: a first correlation determining unit, configured to determine a first correlation between every two of the first quantity of PMU metrics; and a clustering unit, configured to cluster the first quantity of PMU metrics based on a correlation threshold to obtain the plurality of clusters, where a first correlation between any two PMU metrics in a same cluster is not less than the correlation threshold, or an average value of first correlations between every two PMU metrics in a same cluster is not less than the correlation threshold.

In some embodiments of the fourth aspect, the first correlation includes at least one of the following: a covariance, a Euclidean distance, or a Pearson correlation coefficient.

In some embodiments of the fourth aspect, the extraction submodule includes: a second correlation determining unit, configured to determine a second correlation between each of the first quantity of PMU metrics and the target value; a sorting unit, configured to sort the first quantity of PMU metrics based on the second correlation; and an extraction unit, configured to extract the second quantity of PMU metrics from a second quantity of clusters in the plurality of clusters in descending order of second correlations.

In some embodiments of the fourth aspect, the extraction submodule further includes an adjustment unit, configured to replace the first PMU metric with a second PMU metric in the first cluster based on a user preference or an adjustment indication from a user.

In some embodiments of the fourth aspect, the apparatus further includes a receiving module, configured to receive input information of the user, where the input information indicates the second quantity and the correlation threshold.

In some embodiments of the fourth aspect, the model generation module is configured to generate the load feature identification model based on the update training set and a model configuration, where the model configuration includes a model type of the load feature identification model and/or a hyperparameter of the load feature identification model.

In some embodiments of the fourth aspect, the model type includes one or more of the following in a machine learning model: supervised learning or unsupervised learning, where the supervised learning includes at least one of the following: a linear regression type or a neural network type; and the unsupervised learning includes at least one of the following: K-nearest neighbors or an expectation-maximization type.

In some embodiments of the fourth aspect, the apparatus further includes a test module, configured to test the load feature identification model based on a test set, where the tested load feature identification model meets an accuracy requirement.

In some embodiments of the fourth aspect, the running feature includes a performance speedup ratio between the first core and the second core.

According to a fifth aspect, an electronic device is provided, including a multi-core processor and a memory, where the memory stores instructions executed by the multi-core processor, and when the instructions are executed by the multi-core processor, the electronic device is enabled to: obtain a plurality of first PMU metrics corresponding to a case in which a task runs on a first core of a heterogeneous system; input the plurality of first PMU metrics into a pre-generated load feature identification model, to obtain a predicted running feature of the task; and schedule the task based on the predicted running feature.

In some embodiments of the fifth aspect, when the instructions are executed by the multi-core processor, the electronic device is enabled to: migrate the task to run on a second core of the heterogeneous system; and obtain a plurality of second PMU metrics and a second task running metric that correspond to a case in which the task runs on the second core, where the second task running metric includes second running time and/or a second application performance metric.

In some embodiments of the fifth aspect, when the instructions are executed by the multi-core processor, the electronic device is enabled to obtain a first task running metric corresponding to a case in which the task runs on the first core, where the first task running metric includes first running time and/or a first application performance metric. Optionally, the first application performance metric may include a first throughput and/or first IPC.

In some embodiments of the fifth aspect, when the instructions are executed by the multi-core processor, the electronic device is enabled to determine an actual running feature of the task based on the first task running metric and the second task running metric.

In some embodiments of the fifth aspect, when the instructions are executed by the multi-core processor, the electronic device is enabled to store at least one of the following: the plurality of first PMU metrics, the plurality of second PMU metrics, the first task running metric, the second task running metric, the predicted running feature, or the actual running feature.

In some embodiments of the fifth aspect, when the instructions are executed by the multi-core processor, the electronic device is enabled to: if an error between the predicted running feature and the actual running feature exceeds an error threshold, determine a quantity of times that the error of the task exceeds the error threshold; and if the quantity of times of the task exceeds a threshold for the quantity of times, update the load feature identification model based on the second PMU metric and the actual running feature.

In some embodiments of the fifth aspect, when the instructions are executed by the multi-core processor, the electronic device is enabled to: determine whether an updated load feature identification model meets an accuracy requirement; and if it is determined that the accuracy requirement is not met, regenerate the load feature identification model.

In some embodiments of the fifth aspect, when the instructions are executed by the multi-core processor, the electronic device generates the load feature identification model according to the following process: constructing an initial training set, where the initial training set includes a plurality of initial data items, each initial data item includes a first quantity of PMU metrics and a target value that correspond to a case in which the task runs on the first core or the second core of the heterogeneous system, and the target value indicates a running feature of the task; constructing an update training set based on the initial training set, where the update training set includes a plurality of update data items, each update data item includes a second quantity of PMU metrics and the target value, and the second quantity is less than the first quantity; and generating the load feature identification model based on the update training set.

In some embodiments of the fifth aspect, when the instructions are executed by the multi-core processor, the electronic device is enabled to: obtain the first quantity of PMU metrics; obtain the first application performance metric corresponding to the case in which the task runs on the first core; obtaining the second application performance metric corresponding to the case in which the task runs on the second core; determine the target value based on the first application performance metric and the second application performance metric; and construct the initial training set based on the first quantity of PMU metrics and the target value.

In some embodiments of the fifth aspect, when the instructions are executed by the multi-core processor, the electronic device is enabled to: divide the first quantity of PMU metrics into a plurality of clusters; extract the second quantity of PMU metrics from the plurality of clusters; and construct the update training set based on the second quantity of PMU metrics and the target value.

In some embodiments of the fifth aspect, when the instructions are executed by the multi-core processor, the electronic device is enabled to: determine a first correlation between every two of the first quantity of PMU metrics; and cluster the first quantity of PMU metrics based on a correlation threshold to obtain the plurality of clusters, where a first correlation between any two PMU metrics in a same cluster is not less than the correlation threshold, or an average value of first correlations between every two PMU metrics in a same cluster is not less than the correlation threshold.

In some embodiments of the fifth aspect, the first correlation includes at least one of the following: a covariance, a Euclidean distance, or a Pearson correlation coefficient.

In some embodiments of the fifth aspect, when the instructions are executed by the multi-core processor, the electronic device is enabled to: determine a second correlation between each of the first quantity of PMU metrics and the target value; sort the first quantity of PMU metrics based on the second correlation; and extract the second quantity of PMU metrics from a second quantity of clusters in the plurality of clusters in descending order of second correlations.

In some embodiments of the fifth aspect, the second quantity of PMU metrics include a first PMU metric extracted from a first cluster in the plurality of clusters, and when the instructions are executed by the multi-core processor, the electronic device is enabled to replace the first PMU metric with a second PMU metric in the first cluster based on a user preference or an adjustment indication from a user.

In some embodiments of the fifth aspect, when the instructions are executed by the multi-core processor, the electronic device is enabled to: receive input information of the user, where the input information indicates the second quantity and the correlation threshold.

In some embodiments of the fifth aspect, when the instructions are executed by the multi-core processor, the electronic device is enabled to generate the load feature identification model based on the update training set and a model configuration, where the model configuration includes a model type of the load feature identification model and/or a hyperparameter of the load feature identification model. In some embodiments of the first aspect, the model type includes one or more of the following in a machine learning model: supervised learning or unsupervised learning, where the supervised learning includes at least one of the following: a linear regression type or a neural network type; and the unsupervised learning includes at least one of the following: K-nearest neighbors or an expectation-maximization type.

In some embodiments of the fifth aspect, when the instructions are executed by the multi-core processor, the electronic device is enabled to test the load feature identification model based on a test set, where the tested load feature identification model meets an accuracy requirement.

In some embodiments of the fifth aspect, the running feature includes a performance speedup ratio between the first core and the second core.

According to a sixth aspect, an electronic device is provided, including a multi-core processor and a memory, where the memory stores instructions executed by the multi-core processor, and when the instructions are executed by the multi-core processor, the electronic device is enabled to: construct an initial training set, where the initial training set includes a plurality of initial data items, each initial data item includes a first quantity of PMU metrics and a target value that correspond to a case in which a task runs on a first core or a second core of a heterogeneous system, and the target value indicates a running feature of the task; construct an update training set based on the initial training set, where the update training set includes a plurality of update data items, each update data item includes a second quantity of PMU metrics and the target value, and the second quantity is less than the first quantity; and generate a load feature identification model based on the update training set.

In some embodiments of the sixth aspect, when the instructions are executed by the multi-core processor, the electronic device is enabled to: obtain the first quantity of PMU metrics; obtain a first application performance metric corresponding to the case in which the task runs on the first core; obtain a second application performance metric corresponding to the case in which the task runs on the second core; determine the target value based on the first application performance metric and the second application performance metric; and construct the initial training set based on the first quantity of PMU metrics and the target value.

In some embodiments of the sixth aspect, when the instructions are executed by the multi-core processor, the electronic device is enabled to: divide the first quantity of PMU metrics into a plurality of clusters; extract the second quantity of PMU metrics from the plurality of clusters; and construct the update training set based on the second quantity of PMU metrics and the target value.

In some embodiments of the sixth aspect, when the instructions are executed by the multi-core processor, the electronic device is enabled to: determine a first correlation between every two of the first quantity of PMU metrics; and cluster the first quantity of PMU metrics based on a correlation threshold to obtain the plurality of clusters, where a first correlation between any two PMU metrics in a same cluster is not less than the correlation threshold, or an average value of first correlations between every two PMU metrics in a same cluster is not less than the correlation threshold.

In some embodiments of the sixth aspect, the first correlation includes at least one of the following: a covariance, a Euclidean distance, or a Pearson correlation coefficient.

In some embodiments of the sixth aspect, when the instructions are executed by the multi-core processor, the electronic device is enabled to: determine a second correlation between each of the first quantity of PMU metrics and the target value; sort the first quantity of PMU metrics based on the second correlation; and extract the second quantity of PMU metrics from a second quantity of clusters in the plurality of clusters in descending order of second correlations.

In some embodiments of the sixth aspect, the second quantity of PMU metrics include a first PMU metric extracted from a first cluster in the plurality of clusters, and when the instructions are executed by the multi-core processor, the electronic device is enabled to replace the first PMU metric with a second PMU metric in the first cluster based on a user preference or an adjustment indication from a user.

In some embodiments of the sixth aspect, when the instructions are executed by the multi-core processor, the electronic device is enabled to: receive input information of the user, where the input information indicates the second quantity and the correlation threshold.

In some embodiments of the sixth aspect, when the instructions are executed by the multi-core processor, the electronic device is enabled to generate the load feature identification model based on the update training set and a model configuration, where the model configuration includes a model type of the load feature identification model and/or a hyperparameter of the load feature identification model.

In some embodiments of the sixth aspect, the model type includes one or more of the following in a machine learning model: supervised learning or unsupervised learning, where the supervised learning includes at least one of the following: a linear regression type or a neural network type; and the unsupervised learning includes at least one of the following: K-nearest neighbors or an expectation-maximization type.

In some embodiments of the sixth aspect, when the instructions are executed by the multi-core processor, the electronic device is enabled to test the load feature identification model based on a test set, where the tested load feature identification model meets an accuracy requirement.

In some embodiments of the sixth aspect, the running feature includes a performance speedup ratio between the first core and the second core.

According to a seventh aspect, a computer-readable storage medium is provided. The computer-readable storage medium stores a computer program, and when the computer program is executed by a processor, an operation of the method the first aspect or the second aspect or any embodiment of the first aspect or the second aspect is implemented.

According to an eighth aspect, a chip or a chip system is provided. The chip or the chip system includes a processing circuit, and is configured to perform an operation of the method according to the first aspect or the second aspect or any embodiment of the first aspect or the second aspect.

According to a ninth aspect, a computer program or a computer program product is provided. The computer program or the computer program product is tangibly stored on a computer-readable medium and includes computer-executable instructions. When the computer-executable instructions are executed, a device is enabled to implement an operation of the method according to the first aspect or the second aspect or any embodiment of the first aspect or the second aspect.

## BRIEF DESCRIPTION OF DRAWINGS

The foregoing and other features, advantages, and aspects of embodiments of this disclosure become more apparent with reference to accompanying drawings and the following detailed descriptions. In the accompanying drawings, same or similar reference numerals indicate same or similar elements.

FIG. 1 is a block diagram of a heterogeneous system to which an embodiment of this disclosure can be applied;
FIG. 2 is a schematic flowchart of a task scheduling process according to some embodiments of this disclosure;
FIG. 3 is a block diagram of a system according to some embodiments of this disclosure;
FIG. 4 is a schematic flowchart of a process of generating a load feature identification model according to some embodiments of this disclosure;
FIG. 5 is another schematic flowchart of a process of generating a load feature identification model according to some embodiments of this disclosure;
FIG. 6 is a schematic flowchart of a model calibration process according to some embodiments of this disclosure;
FIG. 7 is a block diagram of a task scheduling apparatus according to some embodiments of this disclosure;
FIG. 8 is a block diagram of a model generation apparatus according to some embodiments of this disclosure; and
FIG. 9 is a block diagram of an example device that can be used to implement an embodiment of this disclosure.

## DESCRIPTION OF EMBODIMENTS

Embodiments of this disclosure are described in more detail in the following with reference to accompanying drawings. Although some embodiments of this disclosure are shown in the accompanying drawings, it should be understood that this disclosure can be implemented in various forms, and should not be construed as being limited to embodiments described herein, and instead, these embodiments are provided for a more thorough and complete understanding of this disclosure. It should be understood that the accompanying drawings and embodiments of this disclosure are only used as examples and are not intended to limit the protection scope of this disclosure.

In the descriptions of embodiments of this disclosure, the term "including" and similar terms thereof shall be understood as non-exclusive inclusions, that is, "including but not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below.

As described above, a task is scheduled to a proper hardware resource (for example, a core). This can fully utilize the hardware resource. Generally, the task may be scheduled to the hardware resource based on a running feature of the task. Therefore, a more accurate running feature of the task is required.

Embodiments of this disclosure provide a task scheduling solution for a heterogeneous system, so that a more accurate running feature of a task can be obtained based on a pre-generated model, and can be used for task scheduling. In this way, the task can be scheduled to a proper hardware resource. This improves hardware resource utilization, and improves task processing efficiency.

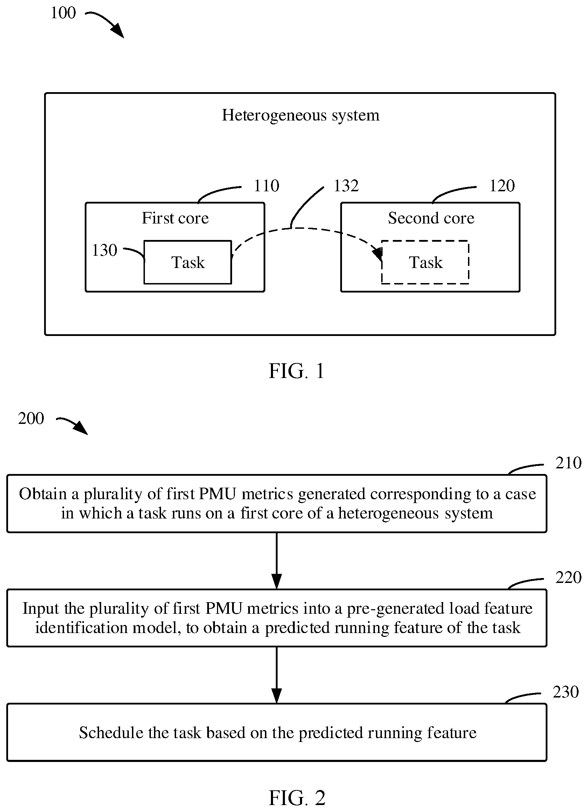

FIG. 1 is a block diagram of a heterogeneous system 100 to which an embodiment of this disclosure can be applied. As shown in FIG. 1, the heterogeneous system 100 includes a first core 110 and a second core 120. The first core 110 and the second core 120 belong to different hardware resources. The first core 110 and the second core 120 may have different computing capabilities. For example, a computing capability of the first core 110 is lower than a computing capability of the second core 120.

For example, the first core 110 may be a central processing unit (Central Processing Unit, CPU), and the second core 120 may be a graphics processing unit (Graphics Processing Unit, GPU). For another example, the first core 110 may be a CPU, and the second core 120 may be a field programmable gate array (Field Programmable Gate Array, FPGA). For another example, the first core 110 may be a CPU, and the second core 120 may be a tensor processing unit (Tensor Processing Unit, TPU). It may be understood that examples of the first core 110 and the second core 120 herein are only examples, and should not be construed as a limitation on embodiments of this disclosure. In some examples, the heterogeneous system 100 may be various XPU heterogeneous computing platforms, or briefly referred to as a heterogeneous computing platform or a heterogeneous platform. Optionally, the first core 110 may be a little core, and the second core 120 may be a big core; or optionally, the first core 110 may be a big core, and the second core 120 may be a little core. It should be noted that, in embodiments of this disclosure, descriptions of the terms "big core" and "little core" are only examples. For example, a computing capability of a big core is stronger than a computing capability of a little core.

As shown in FIG. 1, a task 130 can be scheduled (or referred to as deployed) in the heterogeneous system 100 and run on a core. For example, the task 130 may run on the first core 110. For example, the task 130 may also be migrated in the heterogeneous system 100, as shown by a dashed line arrow 132, and the task 130 may be migrated from the first core 110 to the second core 120. It may be understood that the term "task" in this disclosure may be referred to as load, task load, or the like.

To reflect a running status of the task, hardware, an operating system (Operating System, OS), infrastructure service software, or the like may provide various different detection metrics. For example, a proper monitoring metric may be selected based on expert experience, and a running feature of the task is described by defining a strategy, to schedule the task on different hardware resources. However, expert experience is limited, and the monitoring metrics selected based on expert experience may not be proper for systems with different computing capabilities and a large quantity of metrics. In addition, the defined strategy cannot cope with a task change.

For example, the heterogeneous system 100 may have a multi-core processing architecture. The term "multi-core processing architecture" in this disclosure may be referred to as a multi-core processor architecture, a heterogeneous multi-core processing architecture, a heterogeneous processor architecture, or the like. For example, the "multi-core" in this disclosure may also include many cores, and the "heterogeneous" may also include hyper-heterogeneous or the like. This is not limited in this disclosure.

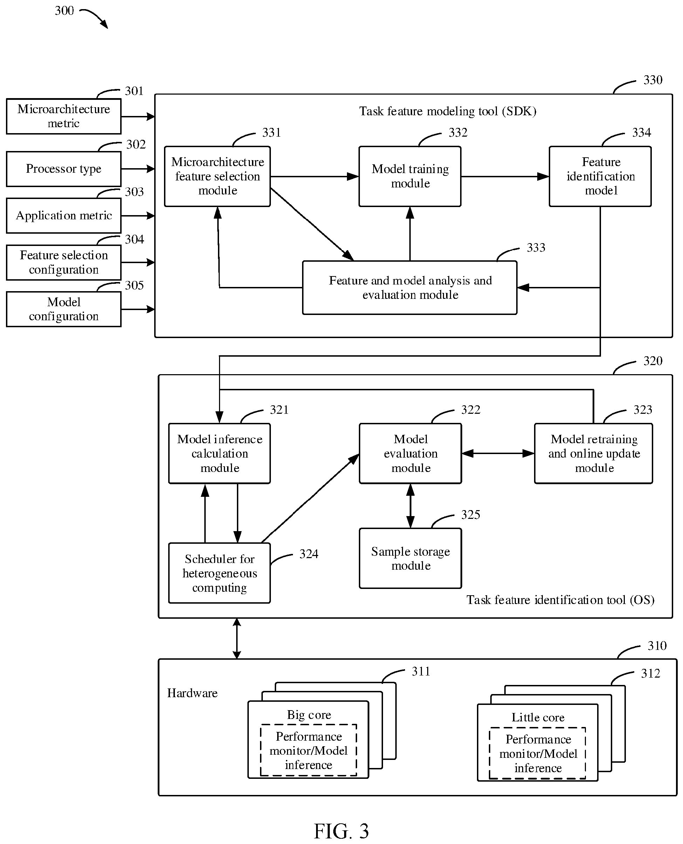

It should be noted that the heterogeneous system 100 shown in FIG. 1 is only an example, and should not be construed as a limitation on embodiments of this disclosure. For example, the heterogeneous system 100 may include more cores (such as middle cores). For example, the heterogeneous system 100 may further include another module, for example, an OS, as described below with reference to FIG. 3.

FIG. 2 is a schematic flowchart of a task scheduling process 200 according to some embodiments of this disclosure. In block 210: Obtain a plurality of first PMU metrics corresponding to a case in which a task runs on a first core of a heterogeneous system. In block 220: Input the plurality of first PMU metrics into a pre-generated load feature identification model, to obtain a predicted running feature of the task. In block 230: Schedule the task based on the predicted running feature.

For example, in block 210, when the task runs on the first core, the plurality of first PMU metrics and a first task running metric may be obtained, where the first task running metric includes, for example, first running time and/or a first application performance metric, and the first application performance metric may include, for example, a first throughput or first IPC.

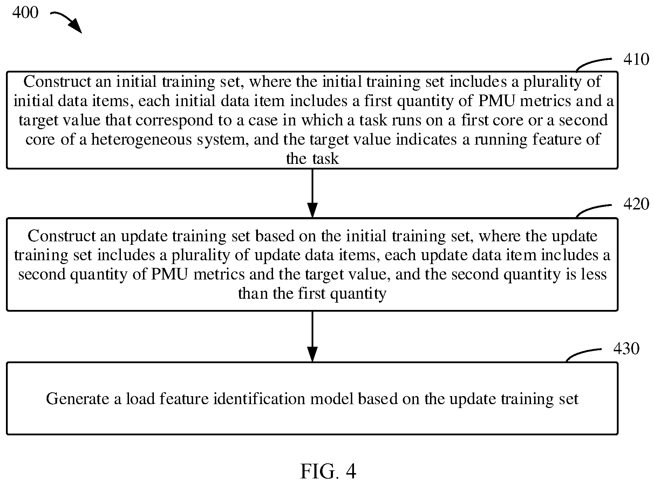

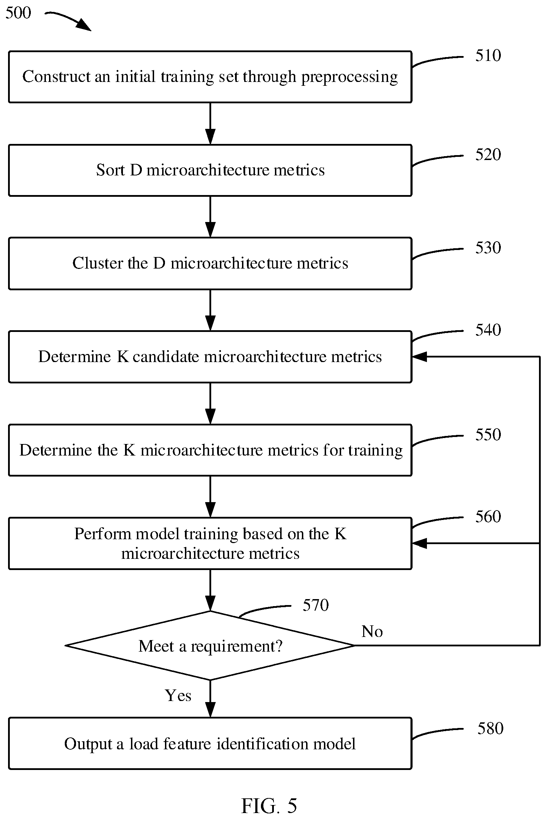

In some embodiments, the pre-generated load feature identification model may be obtained. An input of the load feature identification model is a plurality of (for example, K, where K is a positive integer) PMU metrics, and an output is a running feature of the task. Therefore, in block 220, the obtained plurality of first PMU metrics may be input to the load feature identification model, to obtain the output of the model, namely, the running feature, predicted by the model, of the task. For example, the running feature may indicate a performance speedup ratio between different cores. For example, for a process of generating the load feature identification model, refer to the following embodiments with reference to FIG. 4 and FIG. 5.

In some embodiments, in block 230, the task may be scheduled based on the predicted running feature of the task, for example, the task may be migrated from the first core to a second core.

Additionally or optionally, the task may be migrated to run on the second core of the heterogeneous system, and a plurality of second PMU metrics and a second task running metric that correspond to a case in which the task runs on the second core may be obtained, where the second task running metric includes, for example, second running time and/or a second application performance metric, and the second application performance metric may include, for example, a second throughput or second IPC.

In some examples, an actual running feature of the task may be further determined based on the first task running metric and the second task running metric. For example, the actual running feature of the task, for example, an actual performance speedup ratio, may be determined based on the first application performance metric and the second application performance metric.

In some embodiments, the obtained metrics and the like may be stored, for example, one or more of the following items are stored: the plurality of first PMU metrics, the plurality of second PMU metrics, the first task running metric, the second task running metric, the predicted running feature, or the actual running feature.

Additionally or optionally, the actual running feature may be compared with the predicted running feature to determine accuracy of the load feature identification model. For example, if an error between the predicted running feature and the actual running feature exceeds an error threshold, a quantity of times that the error of the task exceeds the error threshold is determined; and if the quantity of times of the task exceeds a threshold for the quantity of times, the load feature identification model is updated. For example, an updated load feature identification model may be obtained through retraining based on the second PMU metric and the actual running feature.

Optionally, whether the updated load feature identification model meets an accuracy requirement may be further determined. If it is determined that the accuracy requirement is not met, the load feature identification model is regenerated. For example, the load feature identification model that meets the accuracy requirement may be obtained through retraining. If it is determined that the accuracy requirement is met, the obtained load feature identification model may be output (or stored). For example, the load feature identification model may be used for task scheduling shown in FIG. 2.

The following provides detailed descriptions with reference to FIG. 3 to FIG. 6. FIG. 3 is a block diagram of a system 300 according to some embodiments of this disclosure. As shown in FIG. 3, the system 300 includes hardware 310 and a software module, where the software module includes an operating system 320 and a software development kit (Software Development Kit, SDK) 330.

The hardware 310 may include a plurality of cores, for example, a big core 311 and a little core 312. The operating system 320 may include a load feature identification tool, and specifically include a model inference calculation module 321, a model evaluation module 322, a model retraining and online update module 323, a scheduler 324 for heterogeneous computing, and a sample storage module 325. The software development kit 330 may include a task feature modeling tool, and specifically include a microarchitecture feature selection module 331, a model training module 332, and a feature and model analysis and evaluation module 333.

Optionally, the big core 311 and the little core 312 indicate cores of different types. In the system 300, there may be a plurality of cores of a same type. For example, the hardware 310 may include a plurality of big cores and a plurality of little cores. It may be understood that, in another example, the system 300 may also have one or more cores of another type, for example, a middle core. This is not limited in this disclosure.

In some embodiments of this disclosure, the task feature modeling tool may be used to construct (or generate) a load feature identification model 334. Optionally, the load feature identification model 334 may also be referred to as a load feature identification model instance or another name. This is not limited in this disclosure. For example, the task feature modeling tool may generate the load feature identification model 334 through training based on input information. As shown in FIG. 3, the input information may indicate one or more of the following: a microarchitecture metric 301, a processor type 302, an application metric 303, a feature selection configuration 304, and a model configuration 305.

For example, the input information may indicate information about a plurality of tasks, where the information about each task indicates the microarchitecture metric 301, the processor type 302, and the application metric 303. A task 1 is used as an example. The processor type 302 may indicate a core on which the task 1 runs, for example, the big core 311 or the little core 312. The microarchitecture metric 301 may include a plurality of PMU metrics, for example, D PMU metrics, corresponding to a case in which the task 1 runs on a core (for example, the big core 311). The application metric 303 may include application performance, such as a throughput or IPC, corresponding to a case in which the task 1 runs on a core (for example, the big core 311). Optionally, the application metric 303 may include power consumption corresponding to the case in which the task 1 runs on the core.

For example, the input information may indicate information about model training, where the information about model training indicates the feature selection configuration 304 and the model configuration 305. For example, the feature selection configuration 304 may include a correlation threshold and a second quantity (denoted as K), where the second quantity indicates a quantity of PMU metrics in an input of the load feature identification model, and the correlation threshold is used to determine the input of the load feature identification model. For example, the feature selection configuration 304 may include a user preference, to indicate a specific microarchitecture metric. For example, the model configuration 305 may include a model type and/or a hyperparameter of the model. The model type may be one or more of the following in a machine learning model: supervised learning or unsupervised learning, where the supervised learning includes at least one of the following: a linear regression type or a neural network type; and the unsupervised learning includes at least one of the following: K-nearest neighbors or an expectation-maximization type. For example, the model configuration 305 may include an accuracy threshold.

Optionally, the task feature modeling tool may be implemented in a form of software code in the SDK provided by a chip vendor and/or an OS vendor for the user. This is not limited in this disclosure.

FIG. 4 is a schematic flowchart of a process 400 of generating a load feature identification model according to some embodiments of this disclosure. In block 410: Construct an initial training set, where the initial training set includes a plurality of initial data items, each initial data item includes a first quantity of PMU metrics and a target value that correspond to a case in which a task runs on a first core or a second core of a heterogeneous system, and the target value indicates a running feature of the task. In block 420: Construct an update training set based on the initial training set, where the update training set includes a plurality of update data items, each update data item includes a second quantity of PMU metrics and the target value, and the second quantity is less than the first quantity. In block 430: Generate the load feature identification model based on the update training set.

For example, the running feature may include a performance speedup ratio between the first core and the second core.

In some embodiments, in block 410, the first quantity of PMU metrics may be obtained, a first application performance metric corresponding to the case in which the task runs on the first core is obtained, a second application performance metric corresponding to the case in which the task runs on the second core is obtained, the target value is determined based on the first application performance metric and the second application performance metric, and the initial training set is constructed based on the first quantity of PMU metrics and the target value.

In some embodiments, in block 420, the first quantity of PMU metrics may be divided into a plurality of clusters, the second quantity of PMU metrics may be extracted from the plurality of clusters, and the update training set may be determined based on the second quantity of PMU metrics and the target value. The second quantity is less than the first quantity. This can reduce a scale of the training set, reduce a processing scale of subsequent model training, and improve processing efficiency.

In some examples, a first correlation between every two of the first quantity of PMU metrics may be determined, and the first quantity of PMU metrics may be clustered based on the first correlation to obtain the plurality of clusters through division, where a first correlation between any two PMU metrics in a same cluster is not less than a correlation threshold, or an average value of first correlations between every two PMU metrics in a same cluster is not less than a correlation threshold. For example, the first correlation may include a covariance, a Euclidean distance, a Pearson correlation coefficient, or the like.

In some examples, a second correlation between each of the first quantity of PMU metrics and the target value may be determined; the first quantity of PMU metrics are sorted based on the second correlation; and the second quantity of PMU metrics are extracted from a second quantity of clusters in the plurality of clusters in descending order of second correlations.

Additionally or optionally, the second quantity of PMU metrics include a first PMU metric extracted from a first cluster in the plurality of clusters, and the process may further include: replacing the first PMU metric with a second PMU metric in the first cluster based on a user preference or an adjustment indication from a user.

In some embodiments, input information of the user may be received, where the input information indicates the second quantity and the correlation threshold.

In some embodiments, in block 430, the load feature identification model may be generated based on the update training set and a model configuration, where the model configuration includes a model type of the load feature identification model and/or a hyperparameter of the load feature identification model. For example, the model type includes one or more of the following in a machine learning model: supervised learning or unsupervised learning, where the supervised learning includes at least one of the following: a linear regression type, a neural network type, or the like; and the unsupervised learning includes at least one of the following: K-nearest neighbors, an expectation-maximization type, or the like. It may be understood that the model type listed herein is only an example. In actual application, the model type may be another type. This is not limited in this disclosure.

Additionally or optionally, the load feature identification model may also be tested based on a test set.

FIG. 5 is another schematic flowchart of a process 500 of generating a load feature identification model according to some embodiments of this disclosure. The process 500 may be a more specific implementation of the process 400. For example, a PMU metric is also referred to as a microarchitecture metric.

In block 510: Construct an initial training set through preprocessing.

In some embodiments, the initial training set may be constructed based on input information. Specifically, the initial training set may be constructed based on the microarchitecture metric 301, the processor type 302, and the application metric 303. For example, a target value may be obtained based on different application metrics 303 corresponding to different processor types 302. For example, the target value may be a speedup ratio, and is also referred to as a performance speedup ratio.

It is assumed that the input information indicates information about N tasks, and information about each task indicates D microarchitecture metrics, a core that is run, and a corresponding application metric. The task 1 is used as an example. The input information may indicate the D microarchitecture metrics, an application metric 1 corresponding to a case in which the task 1 runs on a first core, and an application metric 2 corresponding to a case in which the task 1 runs on a second core. In this case, a performance speedup ratio of the task 1 between different cores may be determined based on the application metric 1 and the application metric 2, for example, a ratio of the application metric 1 to the application metric 2. The application metric 1 and the application metric 2 indicate a same attribute, for example, a throughput or IPC.

In this manner, the initial training set may include N data items about the N tasks, and each data item includes D microarchitecture metrics (also referred to as D PMU metrics) and a target value (for example, a performance speedup ratio) of a corresponding task. Optionally, the target value may be considered as a label in supervised learning in machine learning.

In some embodiments, the input information may come from a user. For example, the user may collect the microarchitecture metric 301, the processor type 302, and the application metric 303 on a heterogeneous computing platform, and then the user may provide collected information, the feature selection configuration 304, and the model configuration 305 to the task feature modeling tool shown in FIG. 3, so that the task feature modeling tool generates the load feature identification model 334.

In block 520: Determine a correlation between each microarchitecture metric and the target value, and sort the D microarchitecture metrics.

For ease of description, the correlation between the microarchitecture metric and the target value is referred to as a second correlation herein. For example, the second correlation may be a Euclidean distance, a covariance, or a Pearson correlation coefficient. For example, the D microarchitecture metrics may be sorted in descending order of second correlations. Optionally, if the second correlation is the covariance, the D microarchitecture metrics are sorted in descending order of absolute values of covariances.

For example, it is assumed that one of the D microarchitecture metrics is "quantity of times that a CPU execution unit is busy" (cpus.iq.fuBusy), and the target value is the performance speedup ratio (speedup), a covariance between the "quantity of times that the CPU execution unit is busy" and the "performance speedup ratio" may be obtained according to formula (1) below, and the covariance is used as the second correlation.

$$\mathrm{cov(cpus.iq.fuBusy, speedup)=E[cpus.iq.fuBusy*speedup]-E[cpus.iq.fuBusy]*E[speedup]}$$

In formula (1), cov() indicates a covariance between two variables in parentheses, and E[] indicates an expectation of a variable in square brackets. A larger absolute value of the covariance indicates a higher correlation between the two variables.

In an example, Table 1 below shows a plurality of microarchitecture metrics sorted in descending order of second correlations.

**Table 1**

| Microarchitecture metric | Second correlation |
| --- | --- |
| Quantity of instruction transmissions (cpus.iq.statIssuedInstType_0::IntDiv) divided by a CPU integer | 0.897416925 |
| Quantity of new instructions that cannot be delivered by the CPU because the execution unit divided by a CPU integer is busy (cpus.iq.statFuBusy::IntDiv) | 0.656846967 |
| Percentage that a CPU execution unit is busy (cpus.iq.fuBusyRate) | 0.617175705 |
| Quantity of times that the CPU execution unit is busy (cpus.iq.fuBusy) | 0.607730231 |
| Quantity of cycles in which a CPU dispatching unit performs back pressure on a previous unit (cpus.iew.blockCycle)s | 0.439584291 |
| Quantity of updated instructions (commit.commitSquashedInsts) | 0.421956861 |

(continued)

| Microarchitecture metric | Second correlation |
|---|---|
| Transmitted floating-point variance instruction (cpus.iq.statIssuedInstType_0::FloatSqrt) | 0.354064633 |
| Quantity of cycles in which a quantity of submitted instructions reaches a bandwidth limit (cpus.commit.numCommittedDist::samples) | -0.347900795 |

In block 530: Determine a correlation between every two of the D microarchitecture metrics, and perform clustering.

For ease of description, the correlation between two microarchitecture metrics is referred to as a first correlation herein. For example, the first correlation may be a Euclidean distance, a covariance, or a Pearson correlation coefficient.

In some embodiments, clustering may be performed based on the first correlation and a correlation threshold indicated by the feature selection configuration 304 to divide the D microarchitecture metrics into a plurality of clusters. For example, a same cluster may include one or more microarchitecture metrics, and a first correlation between any two microarchitecture metrics in the same cluster is not less than (or not greater than) the correlation threshold. Optionally, the plurality of clusters may also be referred to as a plurality of classes, a plurality of sets, a plurality of subsets, or other names. This is not limited in this disclosure. Optionally, clustering may also be referred to as grouping, clustering, classification, division, or another name. This is not limited in this disclosure.

For example, the first correlation between every two of the D microarchitecture metrics may include $D \times D$ values. For example, because a first correlation between a first microarchitecture metric and a second microarchitecture metric is equal to the first correlation between the second microarchitecture metric and the first microarchitecture metric, and a first correlation between a microarchitecture metric (for example, the first microarchitecture metric) and the microarchitecture metric is equal to 1, a correlation between every two of the D microarchitecture metrics may include $D \times (D-1)/2$ values. For example, the first correlation between the microarchitecture metric and the microarchitecture metric is not considered in this disclosure.

During clustering, it may be determined, after all the first correlations are traversed, whether the first correlations belong to a same cluster, or a union-find algorithm or the like may be used. This is not limited in this disclosure. In this manner, the D microarchitecture metrics may be divided into a plurality of clusters (for example, C), each microarchitecture metric belongs to and belongs to only one cluster, and the first correlation between any two microarchitecture metrics in each cluster is not less than or not greater than the correlation threshold.

In an example, it is assumed that the correlation threshold is 0.8, and Table 2 shows a cluster including three microarchitecture metrics.

**Table 2**

| | Quantity of updated instructions | Quantity of cycles in which a quantity of submitted instructions reaches a bandwidth limit | Quantity of cycles in which a CPU dispatching unit performs back pressure on a previous unit |
|---|---|---|---|
| Quantity of updated instructions | 1 | -0.95662 | 0.979279 |
| Quantity of cycles in which a quantity of submitted instructions reaches a bandwidth limit | -0.95662 | 1 | -0.87923 |
| Quantity of cycles in which a CPU dispatching unit performs back pressure on a previous unit | 0.979279 | -0.87923 | 1 |

In 540: Select a second quantity (K) of candidate microarchitecture metrics based on sorting determined in 520 and the plurality of clusters determined in 530. For example, K is far less than D. For example, K is two orders of magnitude or three orders of magnitude lower than D. For example, K=7, and D=2000. For example, the selected K microarchitecture metrics belong to K different clusters. In other words, during selection, at most one microarchitecture metric is selected for each cluster.

In some embodiments, sorting may be performed. In other words, selection is performed in descending order of second correlations. For example, an unselected microarchitecture metric with a highest second correlation is determined from sorting. If the microarchitecture metric and all selected microarchitecture metrics do not belong to a same cluster, the microarchitecture metric with the highest second correlation is selected; otherwise, the microarchitecture metric with the highest second correlation is not selected.

For example, with reference to Table 1 and Table 2, after cpus.iew.blockCycles is selected, because a next microarchitecture metric commit.commitSquashedInsts and cpus.iew.blockCycles belong to a same cluster, commit.commitSquashedInsts is not selected.

For example, the K candidate microarchitecture metrics may form a candidate set. Optionally, microarchitecture metrics may be selected in sequence and placed in the candidate set. If a microarchitecture metric and an existing candidate microarchitecture metric in the candidate set belong to a same cluster, the microarchitecture metric is not placed in the candidate set; otherwise, the microarchitecture metric is used as a candidate microarchitecture metric. Such sequential selection may continue until a quantity of candidate microarchitecture metrics in the candidate set reaches the second quantity (K) indicated by the feature selection configuration 304.

In this embodiment of this disclosure, operations in block 510 to block 540 may be performed by the microarchitecture feature selection module 331 shown in FIG. 3. The microarchitecture feature selection module 331 can automatically select, for example, K microarchitecture metrics from a large quantity of (for example, D) microarchitecture metrics based on the feature selection configuration 304 entered by the user. Specifically, after the microarchitecture feature selection module 331 determines a correlation between every two of the D input microarchitecture metrics, the microarchitecture feature selection module 331 may perform clustering based on a correlation threshold in the feature selection configuration 304, and then automatically select K optimal microarchitecture metrics based on a sorting result of correlations between microarchitecture metrics and the target value.

In block 550: Obtain the K microarchitecture metrics for training based on the K candidate microarchitecture metrics. In some examples, the K candidate microarchitecture metrics may be used as the K microarchitecture metrics for training. In some other examples, the K candidate microarchitecture metrics may be adjusted based on a user preference, for example, one or more of the candidate microarchitecture metrics are replaced with other microarchitecture metrics, to obtain the K microarchitecture metrics for training.

In some embodiments, if the user preference indicates a specific microarchitecture metric, and the K candidate microarchitecture metrics do not include the specific microarchitecture metric, a first candidate microarchitecture metric that is in the K candidate microarchitecture metrics and that belongs to a same cluster with the specific microarchitecture metric may be determined, and the first candidate microarchitecture metric is replaced with the specific microarchitecture metric. In this manner, the K microarchitecture metrics for training may be obtained after replacement.

Optionally, in some embodiments, the user may evaluate the K candidate microarchitecture metrics to determine whether the K candidate microarchitecture metrics are representative, and the user may replace one or more candidate microarchitecture metrics that are considered to be unrepresentative with a same quantity of other more representative microarchitecture metrics. For example, the replaced candidate microarchitecture metric and the replacing microarchitecture metric belong to a same cluster.

In embodiments of this disclosure, an operation in block 550 may be omitted, for example, the K candidate microarchitecture metrics obtained in 540 are used for a training operation in 560 below.

With reference to FIG. 3, the operation in block 550 may be performed by the feature and model analysis and evaluation module 333. For example, the feature and model analysis and evaluation module 333 includes a feature analysis and evaluation submodule. In an example, the feature analysis and evaluation submodule may obtain, based on the user preference indicated by the user in the feature selection configuration 304, the K microarchitecture metrics for training. In another example, the feature analysis and evaluation submodule may be selected and/or confirmed by the user through a human-machine interaction graphical user interface (Graphical User Interface, GUI). For example, the feature analysis and evaluation submodule may provide, for the user through the GUI, K clusters in which the K candidate microarchitecture metrics are located, a plurality of microarchitecture metrics included in the K clusters, and corresponding second correlations, so that the user may adjust the candidate microarchitecture metrics based on the second correlations in the clusters. For example, a microarchitecture metric that does not have a highest second correlation but may be more universal may be selected.

In block 560: Perform model training based on the K microarchitecture metrics. With reference to FIG. 3, the model training module 332 may perform training.

In some embodiments, a training set may be constructed based on the K microarchitecture metrics and the target value in the foregoing initial training set. The target value may be a label corresponding to a microarchitecture metric in the training set. For example, model training may be performed based on the training set and the model configuration 305.

In an example, the model configuration 305 may include a model type, for example, the model type is a linear regression type. In another example, the model configuration 305 may include the model type and a hyperparameter of the model. For example, the model type is a neural network type, and the hyperparameter of the model includes a structure parameter, a quantity of iterations, a learning rate, and the like of the model. The structure parameter of the model may include a quantity of intermediate layers of a network, a quantity of neurons at each layer, and the like.

For example, if the model type is the linear regression type, the load feature identification model 334 generated after training may be indicated as formula (2) below.

speedup = 2.5e07 * P1 + 4.89e09 * P2 - 2.35e * P3 + 4.83e08 * P4 + 4.15e07 * P5 - 3.48e06 * P6 - 2.92e08 * P7 + 2.43 (2)

In formula (2), P1 to P7 indicate K microarchitecture metrics, and coefficients 2.5e07, 4.89e09, 2.35e, 4.83e08, 4.15e07, 3.48e06, 2.92e08, and 2.43 are determined through training.

In this way, the generated load feature identification model 334, as shown in formula (2), may be subsequently used for model inference. For example, a performance speedup (speedup) ratio of a task between two cores may be obtained based on microarchitecture metrics P1 to P7 that correspond to a case in which the task runs.

Optionally, the generated load feature identification model 334 may indicate that an input of the generated load feature identification model 334 includes the K microarchitecture metrics, and an output of the generated load feature identification model 334 includes the target value. Optionally, the generated load feature identification model 334 may further indicate a model parameter of the generated load feature identification model 334, for example, include each weight parameter in formula (2). Optionally, the generated load feature identification model 334 may further indicate a training error of the model in the training set and a test error of the model in a test set.

In block 570: Evaluate whether the model meets a requirement. For example, the requirement may include an error requirement or an accuracy requirement. In this manner, underfitting or overfitting can be avoided by evaluating the model.

In some examples, the load feature identification model may be tested based on the test set, to obtain accuracy of the model. If the accuracy is less than an accuracy threshold indicated by the model configuration 305, it indicates that the model does not meet the requirement, and then 540 or 560 may be returned. If the accuracy is not less than (for example, greater than) the accuracy threshold indicated by the model configuration 305, it indicates that the model meets the requirement, and then the process may proceed to 580. Optionally, a part of the training set may be selected as the test set. Optionally, a test set that is completely different from the training set or that is the same as some data items of the training set may also be constructed. Optionally, the test set may be referred to as a verification set.

In some examples, the training error and the test error of the load feature identification model may be determined, and a difference between the training error and the test error is determined. If the difference is greater than an error threshold, it indicates that the model does not meet the requirement, and 540 or 560 may be returned. If the difference is less than (for example, not greater than) the error threshold, it indicates that the model meets the requirement, and the process may proceed to 580. Optionally, a manner of determining the difference may be, for example, |(test error-training error)/training error|. For example, the error threshold may be 5% or another value. Optionally, a manner of determining the difference may be, for example, |test error-training error|, for example, the error threshold may be e-03. It may be understood that the manner of determining the difference is not limited thereto, and is not listed herein one by one.

It can be learned that, when the model does not meet the requirement, model training may be triggered again. For example, model training may be triggered again by adjusting a hyperparameter (for example, a quantity of iterations in a deep neural network model) of the model, until the generated model meets a requirement (for example, a precision requirement or an error requirement).

In embodiments of this disclosure, an operation in block 570 may be performed by the feature and model analysis and evaluation module 333 shown in FIG. 3. For example, the feature and model analysis and evaluation module 333 includes a model analysis and evaluation submodule. In an example, the model analysis and evaluation submodule may be configured to determine whether precision of the load feature identification model 334 generated through training is sufficient.

In block 580: Output the generated load feature identification model 334. For example, as shown in FIG. 3, the load feature identification model 334 may be provided for the model inference calculation module 321.

Optionally, the output load feature identification model 334 may indicate that an input of the generated load feature identification model 334 includes the K microarchitecture metrics, and an output of the generated load feature identification model 334 includes the target value. Optionally, the generated load feature identification model 334 may further indicate a model parameter of the generated load feature identification model 334, for example, include each weight parameter in formula (2). Optionally, the generated load feature identification model 334 may further indicate a training error of the model in the training set and a test error of the model in a test set.

The process of model generation in embodiments of this disclosure has been described in more detail with reference to FIG. 5, but it should be understood that process 500 is only an example and should not be construed as a limitation on embodiments of this disclosure, for example, operations in block 520 and block 530 may be interchanged in order, for example, the operation in block 550 may be omitted, for example, the value of the second quantity K may be pre-stored.

In this manner, an embodiment of this disclosure provides a model generation solution. The microarchitecture feature selection module 331 is added to the SDK 330, so that an optimal second quantity of microarchitecture metrics can be automatically selected from a large quantity of microarchitecture metrics, and the selected microarchitecture metrics can reflect differences of tasks in heterogeneous computing. In addition, model training based on the second quantity of microarchitecture metrics can reduce system complexity. Further, the model training module 332 and the feature and model analysis and evaluation module 333 can output the load feature identification model 334 based on the second quantity of microarchitecture metrics. It may be understood that the load feature identification model 334 can be used to determine a running feature of a task based on a second quantity of microarchitecture metrics corresponding to a case in which the task runs on a core, for example, a performance speedup ratio between different cores. It may be understood that only the second quantity of microarchitecture metrics may be monitored, and there is no need to monitor all microarchitecture metrics. In this way, overheads of kernel monitoring can be reduced, and energy consumption can be reduced.

In addition, it may be understood that the model generation solution in this embodiment of this disclosure is generated based on training of a first quantity of microarchitecture metrics. The microarchitecture metrics may be from microarchitecture metrics measured on hardware of any heterogeneous system (for example, a heterogeneous processor architecture including a big core and a little core), or may be from data collected in different scenarios (for example, a database or a big data scenario) on hardware (core) with a same computing capability of the heterogeneous system. Therefore, the model generation solution in this embodiment of this disclosure is universal.

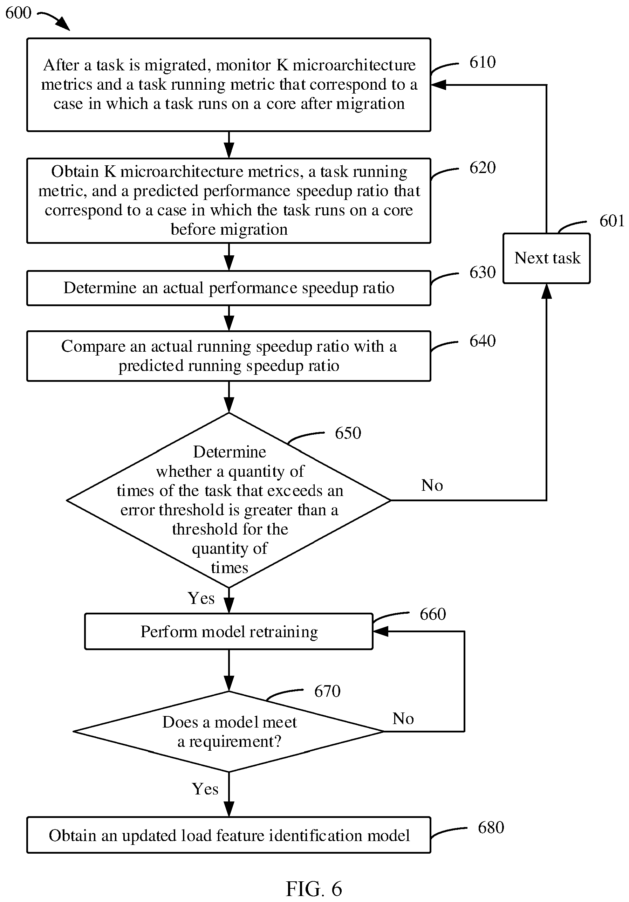

FIG. 6 is a schematic flowchart of a model calibration process 600 according to some embodiments of this disclosure. For example, a load feature identification model may be implemented in an OS kernel. For ease of description, it is assumed that a task is initially run on a first core. For example, the first core may be a big core 311 or a little core 312.

In block 610: After the task is migrated, monitor K microarchitecture metrics and a task running metric that correspond to a case in which the task runs on a core after migration. The task running metric may include task running time, a throughput, IPC, and the like. For example, a core before migration may be referred to as a first core, and a core after migration may be referred to as a second core.

In block 620: Obtain K microarchitecture metrics, a task running metric, and a predicted performance speedup ratio that correspond to a case in which the task runs on the core before migration.

In some examples, FIG. 3 is used as an example. The core before migration may be the first core 311, and the core after migration may be the second core 312; or the core before migration may be the second core 312, and the core after migration may be the first core 311.

For example, when the task runs (for example, on the core before migration), the K microarchitecture metrics corresponding to a case in which the task runs may be obtained, and the K microarchitecture metrics are input into the load feature identification model 334, to obtain the predicted performance speedup ratio. With reference to FIG. 3, the scheduler 324 for heterogeneous computing may collect the K microarchitecture metrics corresponding to a case in which the task runs, and the model inference calculation module 321 obtains the predicted performance speedup ratio through the load feature identification model 334 based on the K microarchitecture metrics from the scheduler 324 for heterogeneous computing. In some examples, the model inference calculation module 321 may provide the predicted performance speedup ratio to the scheduler 324 for heterogeneous computing, so that the scheduler 324 for heterogeneous computing can decide to perform task scheduling based on the predicted performance speedup ratio, for example, perform task migration. In some examples, when the scheduler 324 for heterogeneous computing decides to perform task migration, the scheduler 324 heterogeneous computing may provide, for the model evaluation module 322, the K microarchitecture metrics, the task running metric, and the predicted performance speedup ratio that correspond to a case in which the task runs on the core before migration.

For example, when the task runs (on the core before migration or on the core after migration), the K microarchitecture metrics and the task running metric may be obtained through detection.

For example, with reference to FIG. 3, operations in block 610 and block 620 may be performed by the model evaluation module 322.

In block 630: Determine an actual performance speedup ratio. For example, with reference to FIG. 3, the model evaluation module 322 may determine the actual performance speedup ratio based on a task running metric of the task on the core before migration and a task running metric of the task on the core after migration.

In some examples, the model evaluation module 322 may store the following information in the sample storage module 325: the K microarchitecture metrics and the task running metric of the task running on the core before migration; the K microarchitecture metrics and the task running metric of the task running on the core after migration; and the actual performance speedup ratio. Optionally, the model evaluation module 322 may also store, in the sample storage module 325, the predicted performance speedup ratio determined when the task runs on the core before migration. Optionally, the model evaluation module 322 may further store a model type, for example, a linear regression type or a neural network type.

In block 640: Compare the actual performance speedup ratio with the predicted performance speedup ratio. In some examples, the model evaluation module 322 may obtain a comparison result through comparison, where the comparison result may indicate, for example, an error.

Optionally, in some embodiments, a mean absolute error (Mean Absolute Error, MAE) between the actual performance speedup ratio and the predicted performance speedup ratio in a period of time may be determined. Optionally, in some embodiments, a deviation between the actual performance speedup ratio and the predicted performance speedup ratio may be determined, and is indicated in a form of a percentage.

In block 650: Determine whether a quantity of times of the task that exceeds an error threshold is greater than a threshold for the quantity of times. In some examples, an operation in block 650 may be performed by the model evaluation module 322.

In some examples, the error threshold may be a training error during model training. If the MAE between the actual performance speedup ratio and the predicted performance speedup ratio in the period of time exceeds the training error during model training, it may be determined that the MAE exceeds the error threshold, and the quantity of times of the task that exceeds the error threshold is increased by 1. In some examples, the error threshold may be a preset percentage value (for example, 5%). If a deviation between the actual performance speedup ratio and the predicted performance speedup ratio exceeds 5%, it may be determined that the deviation exceeds the error threshold, and the quantity of times of the task that exceeds the error threshold is increased by 1.

In some embodiments, it may be determined whether the quantity of times exceeding the error threshold in a preset time period is greater than the threshold for the quantity of times. For example, the preset time period may be one day, one hour, or another longer or shorter time. For example, the threshold for the quantity of times may be 5, 20, or another more or less quantity of times. In this way, accumulated accuracy of the model in the preset time period can be determined.

In some other embodiments, as an alternative, in block 650, it may be determined whether a proportion of a quantity of times exceeding the error threshold in the preset time period exceeds a proportion threshold. This is not limited in this disclosure.

For example, if the quantity of times of the task that exceeds the error threshold is greater than the threshold for the quantity of times, the process proceeds to block 660. If the quantity of times of the task that exceeds the error threshold is not greater than the threshold for the quantity of times, the process may proceed to block 601, and an operation in block 610 continues to be performed for the next task.

In this manner, the model evaluation module 322 may perform online evaluation on the model, to determine accuracy of the model during running, to determine whether the model has aged, and further determine whether model retraining needs to be performed.

In block 660: Perform model retraining. With reference to FIG. 3, model retraining and online update module 323 may perform model retraining based on a sample set from the sample storage module 325. For example, a retrained model may be obtained through retraining based on the K microarchitecture metrics of the task running on the core after migration and the actual performance speedup ratio and with reference to a model type (for example, a linear regression type). For example, the model shown in the foregoing formula (2) is used as an example. A model parameter, for example, a weight coefficient may be calibrated and updated through retraining.

In some examples, if the model evaluation module 322 determines that the model has aged, the sample set is extracted from the sample storage module 325 and is provided for the sample set for the model retraining and online update module 323, to trigger the model retraining and online update module 323 to perform model retraining.

In block 670: Determine whether the retrained model meets a requirement. With reference to FIG. 3, the model evaluation module 322 may determine whether the requirement is met. In some embodiments, an operation in block 670 is similar to an operation in block 570 in FIG. 5, and is not described herein again to avoid repetition. For example, if it is determined in block 670 that the requirement is not met, the process returns to block 660. If it is determined that the requirement is met in block 670, the process proceeds to block 680.

In block 680: Obtain an updated load feature identification model. For example, a retrained load feature identification model that meets a requirement may be obtained. In some examples, the updated load feature identification model may be provided for the model inference calculation module 321 for subsequent task scheduling.

In this manner, an embodiment of this disclosure provides a calibration mechanism for a feedback-based online load feature identification model. For example, a microarchitecture metric, a running metric, and the like that correspond to a case in which a task runs on different cores of a heterogeneous system may be collectively referred to as feedback information. In this way, model retraining can be performed based on feedback information before and after the task is migrated between different cores of the heterogeneous system, to obtain an updated model. In this way, online calibration of the model can be implemented, and accuracy of the model can be improved.

With reference to FIG. 3, the scheduler 324 for heterogeneous computing in this embodiment of this disclosure may be understood as an enhanced OS kernel scheduler. When the task runs, the model inference calculation module 321 may be invoked to determine a running feature of the task, for example, predict a performance speedup ratio that is between heterogeneous computing and that is for the task. In addition, after the task is migrated, the feedback information may be further sent to the model evaluation module 322, to implement online feedback dynamic model calibration together with the model retraining and online update module 323.

Therefore, in this embodiment of this disclosure, a problem that accuracy of the model is reduced in a deployment and use process can be resolved, and accuracy of the model can be ensured through online data collection, analysis and evaluation, and retraining.

It should be noted that the foregoing describes some embodiments of this disclosure in detail with reference to FIG. 3 to FIG. 5. However, it should be understood that these are only some embodiments of this disclosure, and should not be construed as a limitation on embodiments of this disclosure. For example, in some examples, the foregoing function of the model inference calculation module 321 may be implemented by using a performance monitor/model inference in the hardware 310. Details are not described herein again.

Optionally, as described above, the application metric 303 may include the power consumption corresponding to a case in which the task runs on the core. Similarly, a power consumption model may be obtained through training, and the power consumption model may be used for comprehensive scheduling of power consumption. Optionally, the load feature identification model 334 and the power consumption model may have different model types, different model parameters, and the like. The load feature identification model 334 and the power consumption model can be independent of each other.

According to this embodiment of this disclosure, a solution for generating the load feature identification model is provided. The load feature identification model can provide a predicted running feature of the task, to provide a reliable reference for task scheduling, and further enable task scheduling to be more accurate. Correspondingly, a hardware resource can be fully utilized.

It should be understood that, in embodiments of this disclosure, expressions such as "first", "second", and "third" and the like are only intended to indicate that a plurality of objects may be different, but two objects may be the same. The expressions such as "first", "second", and "third" should not be construed as any limitation on embodiments of this disclosure.

It should be further understood that division into the manners, cases, categories, and embodiments in embodiments of this disclosure is only intended for ease of description, and should not constitute a specific limitation. The features in the manners, categories, cases, and embodiments may be combined with each other if logical.

It should be further understood that, the foregoing content is only intended to help a person skilled in the art better understand embodiments of this disclosure, instead of limiting the scope of embodiments of this disclosure. A person skilled in the art may make various modifications, variations, combinations, or the like based on the foregoing content. A modified, changed, or combined solution also falls within the scope of embodiments of this disclosure.

It should be further understood that the foregoing content descriptions focus on differences between embodiments. For same or similar parts, refer to each other. For brevity, details are not described herein again.

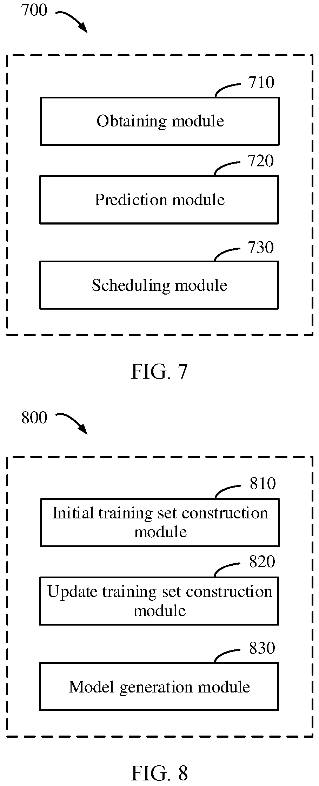

FIG. 7 is a block diagram of a task scheduling apparatus 700 according to some embodiments of this disclosure. The apparatus 700 may be implemented by using software, hardware, or a combination thereof. As shown in FIG. 7, the apparatus 700 includes an obtaining module 710, a prediction module 720, and a scheduling module 730.

The obtaining module 710 may be configured to obtain a plurality of first PMU metrics corresponding to a case in which a task runs on a first core of a heterogeneous system. The prediction module 720 is configured to input the plurality of first PMU metrics into a pre-generated load feature identification model, to obtain a predicted running feature of the task. The scheduling module 730 is configured to schedule the task based on the predicted running feature.

In some embodiments, the apparatus 700 further includes: a task migration module, configured to migrate the task to run on a second core of the heterogeneous system; and a post-migration information obtaining module, configured to obtain a plurality of second PMU metrics and a second task running metric that correspond to a case in which the task runs on the second core, where the second task running metric includes second running time and/or a second application performance metric.

In some embodiments, the obtaining module 710 is further configured to obtain a first task running metric corresponding to a case in which the task runs on the first core, where the first task running metric includes first running time and/or a first application performance metric. Optionally, the first application performance metric may include a first throughput and/or first IPC.

In some embodiments, the apparatus 700 further includes an actual running feature determining module, configured to determine an actual running feature of the task based on the first task running metric and the second task running metric.

In some embodiments, the apparatus 700 further includes a storage module, configured to store at least one of the following: the plurality of first PMU metrics, the plurality of second PMU metrics, the first task running metric, the second task running metric, the predicted running feature, or the actual running feature.

In some embodiments, the apparatus 700 further includes a model update module, configured to: if an error between the predicted running feature and the actual running feature exceeds an error threshold, determine a quantity of times that the error of the task exceeds the error threshold; and if the quantity of times of the task exceeds a threshold for the quantity of times, update the load feature identification model based on the second PMU metric and the actual running feature.

In some embodiments, the apparatus 700 further includes: an accuracy determining module, configured to determine whether an updated load feature identification model meets an accuracy requirement; and a model update module, configured to: if it is determined that the accuracy requirement is not met, regenerate the load feature identification model.

In some embodiments, the apparatus 700 further includes: an initial training set construction module, configured to construct an initial training set, where the initial training set includes a plurality of initial data items, each initial data item includes a first quantity of PMU metrics and a target value that correspond to a case in which the task runs on the first core or the second core of the heterogeneous system, and the target value indicates a running feature of the task; an update training set construction module, configured to construct an update training set based on the initial training set, where the update training set includes a plurality of update data items, each update data item includes a second quantity of PMU metrics and the target value, and the second quantity is less than the first quantity; and a model generation module, configured to generate the load feature identification model based on the update training set.

In some examples, the initial training set construction module includes: a first obtaining submodule, configured to obtain the first quantity of PMU metrics; a second obtaining submodule, configured to obtain the first application performance metric corresponding to the case in which the task runs on the first core; a third obtaining submodule, configured to obtain the second application performance metric corresponding to the case in which the task runs on the second core; a target value determining submodule, configured to determine the target value based on the first application performance metric and the second application performance metric; and an initial training set construction submodule, configured to construct the initial training set based on the first quantity of PMU metrics and the target value.

In some examples, the update training set construction module includes: a clustering submodule, configured to divide the first quantity of PMU metrics into a plurality of clusters; an extraction submodule, configured to extract the second quantity of PMU metrics from the plurality of clusters; and an update training set construction submodule, configured to construct the update training set based on the second quantity of PMU metrics and the target value.

For example, the clustering submodule includes: a first correlation determining unit, configured to determine a first correlation between every two of the first quantity of PMU metrics; and a clustering unit, configured to cluster the first quantity of PMU metrics based on a correlation threshold to obtain the plurality of clusters, where a first correlation between any two PMU metrics in a same cluster is not less than the correlation threshold, or an average value of first correlations between every two PMU metrics in a same cluster is not less than the correlation threshold. Optionally, the first correlation includes at least one of the following: a covariance, a Euclidean distance, or a Pearson correlation coefficient.

For example, the extraction submodule includes: a second correlation determining unit, configured to determine a second correlation between each of the first quantity of PMU metrics and the target value; a sorting unit, configured to sort the first quantity of PMU metrics based on the second correlation; and an extraction unit, configured to extract the second quantity of PMU metrics from a second quantity of clusters in the plurality of clusters in descending order of second correlations.

For example, the extraction submodule further includes an adjustment unit, configured to replace the first PMU metric with a second PMU metric in the first cluster based on a user preference or an adjustment indication from a user.

In some examples, the apparatus 700 further includes a receiving module, configured to receive input information of the user, where the input information indicates the second quantity and the correlation threshold.

In some examples, the model generation module is configured to generate the load feature identification model based on the update training set and a model configuration, where the model configuration includes a model type of the load feature identification model and/or a hyperparameter of the load feature identification model. Optionally, the model type includes one or more of the following in a machine learning model: supervised learning or unsupervised learning, where the supervised learning includes at least one of the following: a linear regression type, a neural network type, or the like; and the unsupervised learning includes at least one of the following: K-nearest neighbors, an expectation-maximization type, or the like.

In some examples, the apparatus 700 further includes a test module, configured to test the load feature identification model based on a test set.

For example, the running feature includes a performance speedup ratio between the first core and the second core.

The apparatus 700 in FIG. 7 can be configured to implement the processes described in FIG. 2 to FIG. 6. For brevity, details are not described herein again.

FIG. 8 is a block diagram of a task scheduling apparatus 800 according to some embodiments of this disclosure. The apparatus 800 may be implemented by using software, hardware, or a combination thereof. As shown in FIG. 8, the apparatus 800 includes an initial training set construction module 810, an update training set construction module 820, and a model generation module 830.

The initial training set construction module 810 may be configured to construct an initial training set, where the initial training set includes a plurality of initial data items, each initial data item includes a first quantity of PMU metrics and a target value that correspond to a case in which a task runs on a first core or a second core of a heterogeneous system, and the target value indicates a running feature of the task. The update training set construction module 820 is configured to construct an update training set based on the initial training set, where the update training set includes a plurality of update data items, each update data item includes a second quantity of PMU metrics and the target value, and the second quantity is less than the first quantity. The model generation module 830 is configured to generate a load feature identification model based on the update training set.

In some embodiments, the initial training set construction module 810 may include: a first obtaining submodule, configured to obtain the first quantity of PMU metrics; a second obtaining submodule, configured to obtain a first application performance metric corresponding to the case in which the task runs on the first core; a third obtaining submodule, configured to obtain a second application performance metric corresponding to the case in which the task runs on the second core; a target value determining submodule, configured to determine the target value based on the first application performance metric and the second application performance metric; and an initial training set construction submodule, configured to construct the initial training set based on the first quantity of PMU metrics and the target value.

In some embodiments, the update training set construction module 820 may include: a clustering submodule, configured to divide the first quantity of PMU metrics into a plurality of clusters; an extraction submodule, configured to extract the second quantity of PMU metrics from the plurality of clusters; and an update training set construction submodule, configured to construct the update training set based on the second quantity of PMU metrics and the target value.

For example, the clustering submodule may include: a first correlation determining unit, configured to determine a first correlation between every two of the first quantity of PMU metrics; and a clustering unit, configured to cluster the first quantity of PMU metrics based on a correlation threshold to obtain the plurality of clusters, where a first correlation between any two PMU metrics in a same cluster is not less than the correlation threshold, or an average value of first correlations between every two PMU metrics in a same cluster is not less than the correlation threshold. Optionally, the first correlation includes at least one of the following: a covariance, a Euclidean distance, or a Pearson correlation coefficient.

For example, the extraction submodule may include: a second correlation determining unit, configured to determine a second correlation between each of the first quantity of PMU metrics and the target value; a sorting unit, configured to sort the first quantity of PMU metrics based on the second correlation; and an extraction unit, configured to extract the second quantity of PMU metrics from a second quantity of clusters in the plurality of clusters in descending order of second correlations. Optionally, the second correlation includes at least one of the following: a covariance, a Euclidean distance, or a Pearson correlation coefficient.

In some examples, the extraction submodule may further include an adjustment unit, configured to replace the first PMU metric with a second PMU metric in the first cluster based on a user preference or an adjustment indication from a user.

In some embodiments, the apparatus 800 may further include a receiving module, configured to receive input information of the user, where the input information indicates the second quantity and the correlation threshold.

In some embodiments, the model generation module 830 may be configured to generate the load feature identification model based on the update training set and a model configuration, where the model configuration includes a model type of the load feature identification model and/or a hyperparameter of the load feature identification model. Optionally, the model type may include one or more of the following in a machine learning model: supervised learning or unsupervised learning, where the supervised learning includes at least one of the following: a linear regression type or a neural network type; and the unsupervised learning includes at least one of the following: K-nearest neighbors or an expectation-maximization type.

In some embodiments, the apparatus 800 may further include a test module, configured to test the load feature identification model based on a test set.

For example, the running feature includes a performance speedup ratio between the first core and the second core.

The apparatus 800 in FIG. 8 can be configured to implement the processes described in FIG. 4 and FIG. 5. For brevity, details are not described herein again.

Division into the modules or the units in embodiments of this disclosure is an example, is only logical function division, and may be other division in actual implementation. In addition, functional units in embodiments of this disclosure may be integrated into one unit, or may exist alone physically, or two or more units may be integrated into one unit. The integrated unit may be implemented in a form of hardware, or may be implemented in a form of a software functional unit.

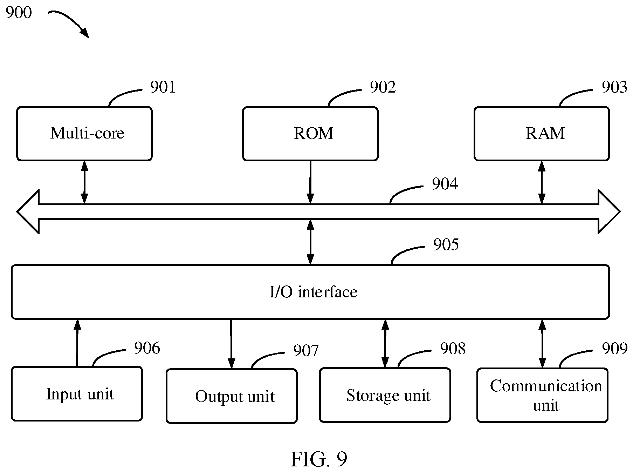

FIG. 9 is a block diagram of an example device 900 that can be used to implement an embodiment of this disclosure. The device 900 can be implemented or included in the heterogeneous system 100 in FIG. 1.

As shown in the figure, the device 900 includes a multi-core processor 901, a read-only memory (Read-Only Memory, ROM) 902, and a random access memory (Random Access Memory, RAM) 903. The multi-core processor 901 may perform various appropriate actions and processes according to computer program instructions stored in the RAM 902 and/or the RAM 903 or computer program instructions loaded from a storage unit 908 to the ROM 902 and/or the RAM 903. The ROM 902 and/or the RAM 903 may further store various programs and data required for an operation of the device 900. The multi-core processor 901 and the ROM 902 and/or the RAM 903 are connected to each other through a bus 904. An input/output (Input/Output, I/O) interface 905 is also connected to the bus 904.

A plurality of components in the device 900 are connected to the I/O interface 905, and include: an input unit 906, for example, a keyboard or a mouse; an output unit 907, for example, various types of displays or speakers; the storage unit 908, for example, a magnetic disk or an optical disc; and a communication unit 909, for example, a network adapter, a modem, or a wireless communication transceiver. The communication unit 909 allows the device 900 to exchange information/data with another device over a computer network such as the internet and/or various telecommunication networks.

The multi-core processor 901 may include a plurality of cores, and each core may be various general-purpose and/or dedicated processing assemblies that have processing and computing capabilities. Some examples that may be implemented include but are not limited to a central processing unit (Central Processing Unit, CPU), a graphics processing unit (Graphics Processing Unit, GPU), any dedicated artificial intelligence (Artificial Intelligence, AI) computing chip, any computing unit that runs a machine learning model algorithm, a digital signal processor (Digital Signal Processor, DSP), and any proper processor, controller, microcontroller, and the like. Correspondingly, the multi-core processor 901 may be referred to as a computing unit. The multi-core processor 901 performs the methods and processing described above. For example, in some embodiments, each process described above may be implemented as a computer software program, and the computer software program is tangibly included in a computer-readable medium, for example, the storage unit 908. In some embodiments, some or all of the computer programs may be loaded to and/or installed on the device 900 through the ROM 902 and/or the RAM 903 and/or the communication unit 909. When the computer program is loaded to the ROM 902 and/or the RAM 903 and executed by the multi-core processor 901, one or more steps of the process described above may be performed. Alternatively, in another embodiment, the multi-core processor 901 may be configured to execute each process described above in any other proper manner (for example, by using firmware).

For example, the device 900 in FIG. 9 may be implemented as a computing device, or may be implemented as a chip or a chip system in a computing device. This is not limited in embodiments of this disclosure.

An embodiment of this disclosure further provides a chip. The chip may include an input interface, an output interface, and a processing circuit. In this embodiment of this disclosure, an input interface and an output interface may complete signaling or data exchange, and a processing circuit may complete generation and processing of signaling or data information.

An embodiment of this disclosure further provides a chip system, including a processor, configured to support a computing device in implementing the function in any one of the foregoing embodiments. In a possible design, the chip system may further include a memory, configured to store necessary program instructions and data. When the processor runs the program instructions, a device in which the chip system is installed is enabled to implement the method in any one of the foregoing embodiments. For example, the chip system may include one or more chips, or may include a chip and another discrete device.

An embodiment of this disclosure further provides a processor, configured to be coupled to a memory. The memory stores instructions. When the processor runs the instructions, the processor is enabled to perform the method and the function in any one of the foregoing embodiments.

An embodiment of this disclosure further provides a computer program product including instructions. When the computer program product runs on a computer, the computer is enabled to perform the method and the function in any one of the foregoing embodiments.

An embodiment of this disclosure further provides a computer-readable storage medium. The computer-readable storage medium stores computer instructions. When a processor runs the instructions, the processor is enabled to perform the method and the function in any one of the foregoing embodiments.

Usually, various embodiments of this disclosure may be implemented by hardware or a dedicated circuit, software, logic, or any combination thereof. Some aspects may be implemented by hardware, and other aspects may be implemented by firmware or software, and may be executed by a controller, a microprocessor, or another computing device. Although various aspects of embodiments of this disclosure are shown and described as block diagrams, flowcharts, or some other figures, it should be understood that the blocks, apparatuses, systems, techniques, or methods described in this specification may be implemented as, for example, non-limiting examples, hardware, software, firmware, dedicated circuits or logic, general-purpose hardware, controllers, other computing devices, or a combination thereof.

This disclosure further provides at least one computer program product tangibly stored in a non-transitory computer-readable storage medium. The computer program product includes computer-executable instructions, such as instructions included in a program module, which are executed in a device on a real or virtual target processor to perform the process/method as described above with reference to the accompanying drawings. Usually, the program module includes a routine, a program, a library, an object, a class, an assembly, a data structure, or the like that executes a specific task or implements a specific abstract data type. In various embodiments, functions of the program modules may be combined or split between the program modules as required. Machine-executable instructions used for the program module may be executed locally or in a distributed device. In the distributed device, the program module may be locally located and located in a remote storage medium.

Computer program code used for implementing the method in this disclosure may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, executed partially on a computer, executed as a standalone software package, executed partially on a computer and partially on a remote computer, or executed entirely on a remote computer or a server.

In the context of this disclosure, the computer program code or related data may be carried in any proper carrier, so that the device, the apparatus, or the processor can perform various processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

The computer-readable medium may be any tangible medium that includes or stores programs used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any suitable combination thereof. More detailed examples of the computer-readable storage medium include an electrical connection with one or more wires, a portable computer disk, a hard disk, a random access memory (RAM), a read-only memory (ROM), an erasable programmable read-only memory (Erasable Programmable Read-Only Memory, EPROM), an optical storage device, a magnetic storage device, or any suitable combination thereof.

In addition, although the operations of the methods in this disclosure are described in a specific order in the accompanying drawings, this does not require or imply that these operations need to be performed in the specific order, or that all the operations shown need to be performed to achieve the desired results. Instead, execution orders of the steps depicted in the flowcharts may change. Additionally or alternatively, some steps may be omitted, a plurality of steps may be combined into one step for execution, and/or one step may be broken down into a plurality of steps for execution. It should further be noted that, the features and functions of two or more apparatuses according to this disclosure may be specific in one apparatus. Instead, features and functions of one apparatus described above may be further specific in a plurality of apparatuses.

The foregoing has described various implementations of this disclosure. The foregoing descriptions are examples, are not exhaustive, and are not limited to the disclosed implementations. Many modifications and changes are clear to a person of ordinary skill in the art without departing from the scope and spirit of the described implementations. Selection of the terms used in this specification is intended to well explain principles of the implementations, actual applications, or improvements to technologies in the market, or to enable another person of ordinary skill in the art to understand the implementations disclosed in this specification.

**Claims**

1. A task scheduling method, comprising:

   obtaining a plurality of first performance monitoring unit PMU metrics corresponding to a case in which a task runs on a first core of a heterogeneous system;
   inputting the plurality of first PMU metrics into a pre-generated load feature identification model, to obtain a predicted running feature of the task; and
   scheduling the task based on the predicted running feature.

2. The method according to claim 1, further comprising:

   migrating the task to run on a second core of the heterogeneous system; and
   obtaining a plurality of second PMU metrics and a second task running metric that correspond to a case in which the task runs on the second core, wherein the second task running metric comprises second running time and/or a second application performance metric.

3. The method according to claim 2, further comprising:
   obtaining a first task running metric corresponding to a case in which the task runs on the first core, wherein the first task running metric comprises first running time and/or a first application performance metric.

4. The method according to claim 3, further comprising:

determining an actual running feature of the task based on the first task running metric and the second task running metric.

5. The method according to claim 4, further comprising: storing at least one of the following:
the plurality of first PMU metrics, the plurality of second PMU metrics, the first task running metric, the second task running metric, the predicted running feature, or the actual running feature.

6. The method according to claim 4 or 5, further comprising:

if an error between the predicted running feature and the actual running feature exceeds an error threshold, determining a quantity of times that the error of the task exceeds the error threshold; and
if the quantity of times of the task exceeds a threshold for the quantity of times, updating the load feature identification model based on the second PMU metric and the actual running feature.

7. The method according to claim 6, further comprising:

determining whether an updated load feature identification model meets an accuracy requirement; and
if it is determined that the accuracy requirement is not met, regenerating the load feature identification model.

8. The method according to any one of claims 1 to 7, wherein the load feature identification model is generated according to the following process:

constructing an initial training set, wherein the initial training set comprises a plurality of initial data items, each initial data item comprises a first quantity of PMU metrics and a target value that correspond to a case in which the task runs on the first core or the second core of the heterogeneous system, and the target value indicates a running feature of the task;
constructing an update training set based on the initial training set, wherein the update training set comprises a plurality of update data items, each update data item comprises a second quantity of PMU metrics and the target value, and the second quantity is less than the first quantity; and
generating the load feature identification model based on the update training set.

9. The method according to claim 8, wherein the constructing an initial training set comprises:

obtaining the first quantity of PMU metrics;
obtaining the first application performance metric corresponding to the case in which the task runs on the first core;
obtaining the second application performance metric corresponding to the case in which the task runs on the second core;
determining the target value based on the first application performance metric and the second application performance metric; and
constructing the initial training set based on the first quantity of PMU metrics and the target value.

10. The method according to claim 8 or 9, wherein the constructing an update training set based on the initial training set comprises:

dividing the first quantity of PMU metrics into a plurality of clusters;
extracting the second quantity of PMU metrics from the plurality of clusters; and
constructing the update training set based on the second quantity of PMU metrics and the target value.

11. The method according to claim 10, wherein the dividing the first quantity of PMU metrics into a plurality of clusters comprises:

determining a first correlation between every two of the first quantity of PMU metrics; and
clustering the first quantity of PMU metrics based on a correlation threshold to obtain the plurality of clusters, wherein a first correlation between any two PMU metrics in a same cluster is not less than the correlation threshold, or an average value of first correlations between every two PMU metrics in a same cluster is not less than the correlation threshold.

12. The method according to claim 11, wherein the first correlation comprises at least one of the following: a covariance, a Euclidean distance, or a Pearson correlation coefficient.

13. The method according to claim 11 or 12, wherein the extracting the second quantity of PMU metrics from the plurality of clusters comprises:

   determining a second correlation between each of the first quantity of PMU metrics and the target value;
   sorting the first quantity of PMU metrics based on the second correlation; and
   extracting the second quantity of PMU metrics from a second quantity of clusters in the plurality of clusters in descending order of second correlations.

14. The method according to claim 13, wherein the second quantity of PMU metrics comprise a first PMU metric extracted from a first cluster in the plurality of clusters, and the method further comprises:
   replacing the first PMU metric with a second PMU metric in the first cluster based on a user preference or an adjustment indication from a user.

15. The method according to any one of claims 11 to 14, further comprising:
   receiving input information of the user, wherein the input information indicates the second quantity and the correlation threshold.

16. The method according to any one of claims 8 to 15, wherein the generating the load feature identification model based on the update training set comprises:
   generating the load feature identification model based on the update training set and a model configuration, wherein the model configuration comprises a model type of the load feature identification model and/or a hyperparameter of the load feature identification model.

17. The method according to claim 16, wherein the model type comprises at least one of the following in a machine learning model: supervised learning or unsupervised learning, wherein

   the supervised learning comprises at least one of the following: a linear regression type or a neural network type; and
   the unsupervised learning comprises at least one of the following: K-nearest neighbors or an expectation-maximization type.

18. The method according to any one of claims 8 to 17, further comprising:
   testing the load feature identification model based on a test set, wherein the tested load identification model meets an accuracy requirement.

19. The method according to any one of claims 8 to 18, wherein the running feature comprises a performance speedup ratio between the first core and the second core.

20. A model generation method, comprising:

   constructing an initial training set, wherein the initial training set comprises a plurality of initial data items, each initial data item comprises a first quantity of performance monitoring unit PMU metrics and a target value that correspond to a case in which a task runs on a first core or a second core of a heterogeneous system, and the target value indicates a running feature of the task;
   constructing an update training set based on the initial training set, wherein the update training set comprises a plurality of update data items, each update data item comprises a second quantity of PMU metrics and the target value, and the second quantity is less than the first quantity; and
   generating a load feature identification model based on the update training set.

21. The method according to claim 20, wherein the constructing an initial training set comprises:

   obtaining the first quantity of PMU metrics;
   obtaining a first application performance metric corresponding to the case in which the task runs on the first core;
   obtaining a second application performance metric corresponding to the case in which the task runs on the second core;

determining the target value based on the first application performance metric and the second application performance metric; and

constructing the initial training set based on the first quantity of PMU metrics and the target value.

22. The method according to claim 20 or 21, wherein the constructing an update training set based on the initial training set comprises:

dividing the first quantity of PMU metrics into a plurality of clusters;

extracting the second quantity of PMU metrics from the plurality of clusters; and

constructing the update training set based on the second quantity of PMU metrics and the target value.

23. The method according to claim 22, wherein the dividing the first quantity of PMU metrics into a plurality of clusters comprises:

determining a first correlation between every two of the first quantity of PMU metrics; and

clustering the first quantity of PMU metrics based on a correlation threshold to obtain the plurality of clusters, wherein a first correlation between any two PMU metrics in a same cluster is not less than the correlation threshold, or an average value of first correlations between every two PMU metrics in a same cluster is not less than the correlation threshold.

24. The method according to claim 23, wherein the first correlation comprises at least one of the following: a covariance, a Euclidean distance, or a Pearson correlation coefficient.

25. The method according to claim 23 or 24, wherein the extracting the second quantity of PMU metrics from the plurality of clusters comprises:

determining a second correlation between each of the first quantity of PMU metrics and the target value;

sorting the first quantity of PMU metrics based on the second correlation; and

extracting the second quantity of PMU metrics from a second quantity of clusters in the plurality of clusters in descending order of second correlations.

26. The method according to claim 25, wherein the second quantity of PMU metrics comprise a first PMU metric extracted from a first cluster in the plurality of clusters, and the method further comprises:

replacing the first PMU metric with a second PMU metric in the first cluster based on a user preference or an adjustment indication from a user.

27. The method according to any one of claims 23 to 26, further comprising:

receiving input information of the user, wherein the input information indicates the second quantity and the correlation threshold.

28. The method according to any one of claims 20 to 27, wherein the generating a load feature identification model based on the update training set comprises:

generating the load feature identification model based on the update training set and a model configuration, wherein the model configuration comprises a model type of the load feature identification model and/or a hyperparameter of the load feature identification model.

29. The method according to claim 28, wherein the model type comprises at least one of the following in a machine learning model: supervised learning or unsupervised learning, wherein

the supervised learning comprises at least one of the following: a linear regression type or a neural network type; and

the unsupervised learning comprises at least one of the following: K-nearest neighbors or an expectation-maximization type.

30. The method according to any one of claims 20 to 29, further comprising:

testing the load feature identification model based on a test set, wherein the tested load identification model meets an accuracy requirement.

31. The method according to any one of claims 20 to 30, wherein the running feature comprises a performance speedup ratio between the first core and the second core.

32. An electronic device, comprising a multi-core processor and a memory, wherein the memory stores instructions executed by the multi-core processor, and when the instructions are executed by the multi-core processor, the electronic device is enabled to implement the method according to any one of claims 1 to 31.

33. A computer-readable storage medium, wherein the computer-readable storage medium stores a computer program, and when the computer program is executed by a processor, the method according to any one of claims 1 to 31 is implemented.

34. A chip, comprising a processing circuit, configured to perform the method according to any one of claims 1 to 31.

35. A computer program product, tangibly stored on a computer-readable medium and comprising computer-executable instructions, wherein when the computer-executable instructions are executed, a device is enabled to implement the method according to any one of claims 1 to 31.

100

Heterogeneous system

| 110 | 132 | 120 |

First core

130

Task

Second core

Task

FIG. 1

200

Obtain a plurality of first PMU metrics generated corresponding to a case in which a task runs on a first core of a heterogeneous system
210

Input the plurality of first PMU metrics into a pre-generated load feature identification model, to obtain a predicted running feature of the task
220

Schedule the task based on the predicted running feature
230

FIG. 2

FIG. 3

400 ⌒

┌─────────────────────────────────────────────────────────────────┐ ⌐ 410
│  Construct an initial training set, where the initial training set includes a plurality of │
│ initial data items, each initial data item includes a first quantity of PMU metrics and a │
│  target value that correspond to a case in which a task runs on a first core or a second │
│  core of a heterogeneous system, and the target value indicates a running feature of │
│                                  the task                                  │
└─────────────────────────────────────────────────────────────────┘

┌─────────────────────────────────────────────────────────────────┐ ⌐ 420
│  Construct an update training set based on the initial training set, where the update │
│ training set includes a plurality of update data items, each update data item includes a │
│  second quantity of PMU metrics and the target value, and the second quantity is less │
│                          than the first quantity                          │
└─────────────────────────────────────────────────────────────────┘

┌─────────────────────────────────────────────────────────────────┐ ⌐ 430
│                                                                 │
│     Generate a load feature identification model based on the update training set     │
│                                                                 │
└─────────────────────────────────────────────────────────────────┘

FIG. 4

500

Construct an initial training set through preprocessing — 510

Sort D microarchitecture metrics — 520

Cluster the D microarchitecture metrics — 530

Determine K candidate microarchitecture metrics — 540

Determine the K microarchitecture metrics for training — 550

Perform model training based on the K microarchitecture metrics — 560

Meet a requirement? — 570

No

Yes

Output a load feature identification model — 580

FIG. 5

600 —

After a task is migrated, monitor K microarchitecture metrics and a task running metric that correspond to a case in which a task runs on a core after migration — 610

Obtain K microarchitecture metrics, a task running metric, and a predicted performance speedup ratio that correspond to a case in which the task runs on a core before migration — 620

Determine an actual performance speedup ratio — 630

Compare an actual running speedup ratio with a predicted running speedup ratio — 640

— 601

Next task

— 650

Determine whether a quantity of times of the task that exceeds an error threshold is greater than a threshold for the quantity of times

No

Yes

Perform model retraining — 660

— 670

Does a model meet a requirement?

No

Yes

Obtain an updated load feature identification model — 680

FIG. 6

700

710

Obtaining module

720

Prediction module

730

Scheduling module

FIG. 7

800

810

Initial training set construction module

820

Update training set construction module

830

Model generation module

FIG. 8

900

| 901 | 902 | 903 |
|-----|-----|-----|
| Multi-core | ROM | RAM |

904

905

| I/O interface |
|---------------|

| 906 | 907 | 908 | 909 |
|-----|-----|-----|-----|
| Input unit | Output unit | Storage unit | Communication unit |

FIG. 9

## INTERNATIONAL SEARCH REPORT

| International application No. |
| --- |
| **PCT/CN2023/115329** |

| A. | CLASSIFICATION OF SUBJECT MATTER |
| --- | --- |

G06F 9/48(2006.01)i; G06N 20/10(2019.01)i

According to International Patent Classification (IPC) or to both national classification and IPC

| B. | FIELDS SEARCHED |
| --- | --- |

Minimum documentation searched (classification system followed by classification symbols)

IPC:G06F,G06N

Documentation searched other than minimum documentation to the extent that such documents are included in the fields searched

Electronic data base consulted during the international search (name of data base and, where practicable, search terms used)

DWPI, ENTXT, ENTXTC, CNTXT, CNKI: PMU指标, 调度, 机器学习, 聚类, 迁移, 任务, 相关度, 性能监测单元, 异构, 阈值, Performance Monitoring Unit, machine learning, cluster, heterogeneous, threshold,

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 114895773 A (SUN YAT-SEN UNIVERSITY) 12 August 2022 (2022-08-12) description, paragraphs 0067-0120 | 1-9, 16, 18-21, 28, 30-35 |
| Y | CN 114895773 A (SUN YAT-SEN UNIVERSITY) 12 August 2022 (2022-08-12) description, paragraphs 0067-0120 | 10-15, 17, 22-27, 29 |
| Y | CN 111062495 A (SHENZHEN HARZONE TECHNOLOGY CO., LTD.) 24 April 2020 (2020-04-24) description, paragraphs 40-160 | 10-15, 17, 22-27, 29 |
| A | CN 112580815 A (SIEMENS HEALTHCARE GMBH) 30 March 2021 (2021-03-30) entire document | 1-35 |
| A | US 2022091960 A1 (INTEL CORP.) 24 March 2022 (2022-03-24) entire document | 1-35 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 November 2023** | **20 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/115329**

| Patent document cited in search report | | | Publication date (day/month/year) | Patent family member(s) | | | Publication date (day/month/year) |
|---|---|---|---|---|---|---|---|
| CN | 114895773 | A | 12 August 2022 | None | | | |
| CN | 111062495 | A | 24 April 2020 | None | | | |
| CN | 112580815 | A | 30 March 2021 | EP | 3798934 | A1 | 31 March 2021 |
| | | | | US | 2021097439 | A1 | 01 April 2021 |
| US | 2022091960 | A1 | 24 March 2022 | None | | | |

Form PCT/ISA/210 (patent family annex) (July 2022)